# EUROPEAN PATENT APPLICATION

(11) **EP 1 271 368 A1**
(43) Date of publication of application: **02.01.2003**
(21) Application number: 01119648.2
(22) Date of filing: 21.08.2001
(51) Int. Cl.: G06F 17/60

(54) **Communication apparatus and communication system and method for calculating advertisement rates**

(30) Priority: 20.06.2001 JP 2001185751
(71) Applicant: Hitachi, Ltd., Chiyoda-ku, Tokyo 101-8010 (JP)
(72) Inventor: Hashimoto, Koji, Hitachi Ltd. New Marunouchi Bldg., Chiyoda-ku, Tokyo 100-8220 (JP); Saito, Masahiko, Hitachi Ltd. New Marunouchi Bldg., Chiyoda-ku, Tokyo 100-8220 (JP); Matsuo, Shigeru, Hitachi Ltd. New Marunouchi Bldg., Chiyoda-ku, Tokyo 100-8220 (JP); Kojima, Yasuyuki, Hitachi Ltd. New Marunouchi Bldg, Chiyoda-ku, Tokyo 100-8220 (JP)
(74) Representative: Beetz & Partner Patentanwälte

(57) **Abstract**

A communication system to which a method for charging a user based on the fact that the user got advertisement information from a base station and dropped in at a shop associated with the advertisement information can be applied and a method for calculating an advertisement fee. A server system has a communication section (121) transmitting and receiving data via a network (100), a storage section (126) storing advertisement information, a storage section (123) storing information relating to a base station therein, and a storage section (125) storing information about an advertiser as customer information. The system transmits advertisement information requested by an advertiser to distribute it to a base station specified by the advertiser and calculates an advertisement fee charged to the advertiser based on a customer history received from an exclusive device installed at the shop associated with the advertisement.

## Description

### BACKGROUND OF THE INVENTION

The present invention relates to a communication terminal and a communication system which distributes and also to advertisement information to the communication terminal, and also to a method for charging an advertisement rate in the communication system.

In a WWW hyperlink system wherein a web page stored in a WWW server computer can be displayed on a display screen at each user terminal via a network such as the Internet, when it is desired to charge an advertiser with an advertisement rate for a banner advertisement displayed on the web page, there has been conventionally known methods for charging an advertisement rate according to its advertisement effect which include a click-ensure type charging method for charging an advertisement rate according to the frequency of access to a web page run by an advertiser when users click a banner advertisement thereon and a success-reward type charging method for charging an advertisement rate first when users obtain information from the banner advertisement and on the basis of the information, apply for its article or service via the web page. According to the aforementioned method, the advertiser can pay an advertisement rate conforming to its advertisement effect.

As a communication system for sending advertisement information to a portable communication terminal such as a portable phone or PHS (Personal Handyphone System), there is suggested a communication system in which a base station sends advertisement information during a wait mode of the portable communication terminal to display it on the portable communication terminal, as disclosed in JP-A-2000-307626, entitled "Communication System". Each base station distributes advertisement information associated with its own peripheral areas, whereby the user can enjoy the more useful information. Since its advertisement rate can be charged to the advertiser, further, the cost corresponding to the advertisement can be subtracted from user's communication charge.

### SUMMARY OF THE INVENTION

The aforementioned success-reward type charging method can be applied only to goods sale via a network such as the Internet. In other words, when a user obtained the information from the advertisement and based on the information, actually dropped in at a shop associated with the advertisement, the success-reward type charging method cannot correctly work because the advertisement space provider cannot recognize the fact that the user dropped in at the shop or received the service offered by the shop.

Meanwhile, the communication system of the JP-A-2000-307626 sends advertisement information from the base station to the portable communication terminal one-sidely. Since the portable communication terminal can stores the past-received advertisement information, when the user wishes to watch it, he can call it from the stored storage but cannot selectively get new advertisement information from the base station when he wishes it.

It is therefore an object of the present invention to provide a system which, when a user wishes to get advertisement information, can selectively get the advertisement information from a base station and as a result of user's advertisement information obtained from the base station, can calculate an advertisement rate on the basis of the fact that the user actually dropped in at a shop associated with the advertisement and received a service offered by the shop, and can charge its advertiser.

In accordance with an aspect of the present invention, there is provided a server system which comprises a communication section for transmitting and receiving data via a network, a storage section for storing therein advertisement information, a storage section for storing therein information relating to a base station, and a storage section for storing therein information about an advertiser as customer information, and wherein the server system transmits the advertisement information requested by the advertiser to distribute it to a base station specified by the advertiser and calculates an advertisement fee to be charged to the advertiser on the basis of a visited-customer history received from an exclusive device installed at the shop associated with the advertisement information.

In accordance with another aspect of the present invention, there is provided a method for calculating an advertisement fee to be charged to an advertiser, wherein the total number of users who received advertisement information from a base station and dropped in at a shop is calculated on the basis of a visited-customer history received from an exclusive device installed at the shop associated with the advertisement information requested by the advertiser to distribute, and the advertisement fee is determined based on the total visitor number.

In accordance with still another aspect of the present invention, there is provided a base station which comprises a storage section for storing therein advertisement information, a radio communication section for transmitting and receiving data to and from a plurality of portable communication terminals in the form of a radio signal, and a finder device for finding at least one of the plurality of portable communication terminals present within a radio signal arrival range, and wherein the base station transmits a radio connection request to the portable communication terminal found by the finder device, and when receiving a connection approval from the portable communication terminal, the base station transmits information for selection of advertisement information to the portable communication terminal and transmits the selected advertisement information to the portable communication terminal.

In accordance with a further aspect of the present invention, there is provided an exclusive device installed at a shop associated with advertisement information, which comprises a storage section for storing therein a visited-customer history, a radio communication section for transmitting and receiving data to and from a plurality of portable communication terminals, and a finder device for finding at least one of the plurality of portable communication terminals present within a radio signal arrival range, and wherein the exclusive device confirms whether or not the portable communication terminal found by the finder device already received the advertisement information associated with the shop from a base station and, when the portable communication terminal already received the advertisement information, records a date at which said confirmation was made as a visited-customer history in the storage section.

In accordance with yet another object of the present invention, there is provided a portable communication terminal which comprises a storage section for storing therein a received advertisement information history and a radio communication section for transmitting and receiving data to and from a base station or an exclusive device in the form of a radio signal, and wherein, when receiving advertisement information from the base station, the portable communication terminal records an identifier corresponding to the advertisement information together with its received date as an received advertisement information history in said storage section, and the portable communication terminal is confirmed by the exclusive device installed at a shop associated with the advertisement information as to the fact that the communication terminal received the advertisement information from the base station using the radio communication section.

### BRIEF DESCRIPTION OF THE DRAWINGS

Fig. 1 shows a configuration of an entire communication system in accordance with a first or second embodiment of the present invention;
Fig. 2 is a diagram for explaining mutual operations among parties involving in a business model in the first or second embodiment of the present invention;
Fig. 3 is an arrangement of a server computer in the first or second embodiment of the present invention;
Fig. 4 shows contents of a database as a collection of files relating to a base station in the server computer;
Fig. 5 shows contents of a database as a collection of customer files in the server computer;
Fig. 6 shows contents of a database as a collection of advertisement information files in the server computer;
Fig. 7 shows contents of a database as a collection of distribution history files in the server computer;
Fig. 8 is a structure of a base station in the first or third embodiment of the present invention;
Fig. 9 shows contents of a database as a collection of distribution history files in the base station;
Fig. 10 shows contents of a database as a collection of distribution history files in the base station;
Fig. 11 is another structure of the base station in the first or third embodiment of the present invention;
Fig. 12 is a structure of a portable communication terminal in the first, second or third embodiment of the present invention;
Fig. 13 shows contents of a database as a collection of receive history files in the portable communication terminal;
Fig. 14 is a structure of an exclusive device in the first, second or third embodiment of the present invention;
Fig. 15 shows contents of a database as a collection of customer history files in the exclusive device;
Fig. 16 shows a flowchart for explaining the operation of the server computer;
Fig. 17 shows an example of a format of an operational message to be transmitted to the base station from the server computer;
Fig. 18 shows an example of a display screen used for specification of the business type of a shop associated with an advertisement in its advertisement distribution request procedure of an advertiser to an advertisement company;
Fig. 19 shows an example of a display screen used for selection of a base station which distributes the advertisement information in its advertisement distribution request procedure of the advertiser to the advertisement company;
Fig. 20 shows another example of a display screen used for selection of the base station which distributes the advertisement information in its advertisement distribution request procedure of the advertiser to the advertisement company;
Fig. 21 shows a further example of a display screen used for selection of the base station which distributes the advertisement information in its advertisement distribution request procedure of the advertiser to the advertisement company;
Fig. 22 shows still another example of a display screen used for selection of the base station which distributes the advertisement information in its advertisement distribution request procedure of the advertiser to the advertisement company;
Fig. 23 shows another flowchart for explaining the operation of the server computer;
Fig. 24 shows a further flowchart for explaining the operation of the server computer;
Fig. 25 shows still another flowchart for explaining the operation of the server computer;
Fig. 26 shows a flowchart for explaining the operation of the base station;
Fig. 27 shows another flowchart for explaining the operation of the base station;
Fig. 28 shows a further flowchart for explaining the operation of the base station;
Fig. 29 shows a flowchart for explaining the operations of a master and slave in an inquiry operation;
Fig. 30 shows still another flowchart for explaining the operation of the base station;
Fig. 31 shows a flowchart for explaining the operation of a portable communication terminal;
Fig. 32 shows another flowchart for explaining the operation of the portable communication terminal;
Fig. 33 shows an exemplary structure of an input section of the portable communication terminal;
Fig. 34 shows an exemplary display screen of the portable communication terminal to be confirmed by a user as to whether or not to connect when receiving a connection request from the base station;
Fig. 35 shows an exemplary screen displayed on a display section of the portable communication terminal when receiving information from the base station;
Fig. 36 shows an exemplary screen displayed on a display section of the portable communication terminal when receiving other information from the base station;
Fig. 37 shows another flowchart for explaining the operation of the portable communication terminal;
Fig. 38 shows a further flowchart for explaining the operation of the portable communication terminal;
Fig. 39 shows yet another flowchart for explaining the operation of the portable communication terminal;
Fig. 40 shows a flowchart for explaining the operation of an exclusive device;
Fig. 41 shows another flowchart for explaining the operation of the exclusive device;
Fig. 42 shows a further flowchart for explaining the operation of the exclusive device;
Fig. 43 shows still another flowchart for explaining the operation of the exclusive device;
Fig. 44 shows yet another flowchart for explaining the operation of the exclusive device;
Fig. 45 is another configuration of the entire communication system in accordance with the first or second embodiment of the present invention;
Fig. 46 is a further configuration of the entire communication system in accordance with the first or second embodiment of the present invention;
Fig. 47 shows a structure of a base station in the second embodiment of the present invention;
Fig. 48 shows contents of a database as a collection of found device files in the database;
Fig. 49 shows another flowchart for explaining the operation of the server computer;
Fig. 50 shows another flowchart for explaining the operation of the base station;
Fig. 51 shows a configuration of the entire communication system in accordance with the third embodiment of the present invention;
Fig. 52 is a diagram for explaining mutual operations of persons and objects associated with a business model in the third embodiment of the present invention;
Fig. 53 is an arrangement of a server computer in the third embodiment of the present invention;
Fig. 54 shows contents of a database as a collection of base-station provider files in the server computer;
Fig. 55 shows another flowchart for explaining the operation of the server computer;
Fig. 56 shows a further flowchart for explaining the operation of the server computer; and
Fig. 57 shows another flowchart for explaining the operation of the base station.

### DESCRIPTION OF THE EMBODIMENTS

Prior to explanation of embodiments of the present invention, explanation will first be made as to the situation in which the present invention is to be applied. Advertisement is carried out usually about its goods, service or the like by an advertiser over persons which may possibly become consumers. However, its advertisement information may be offered from a third party in some cases. The present invention corresponds to such a third party.

In order to avoid confusion between the advertiser and third party, words to be used in the explanation of the present invention will be defined as follows. The "advertiser" is defined as a person who offers advertisement information to persons who possibly become consumers for advertisement; the "user" is defined as a person who receives the advertisement information, i.e., possible becomes a consumer; and the "advertisement company" is defined as a third person who distributes the advertisement information requested by the advertiser toward the user with use of a communication system. In this connection, the advertisement company can also be the advertiser.

Explanation will be made as to a first embodiment of the present invention by referring to the accompanying drawings.

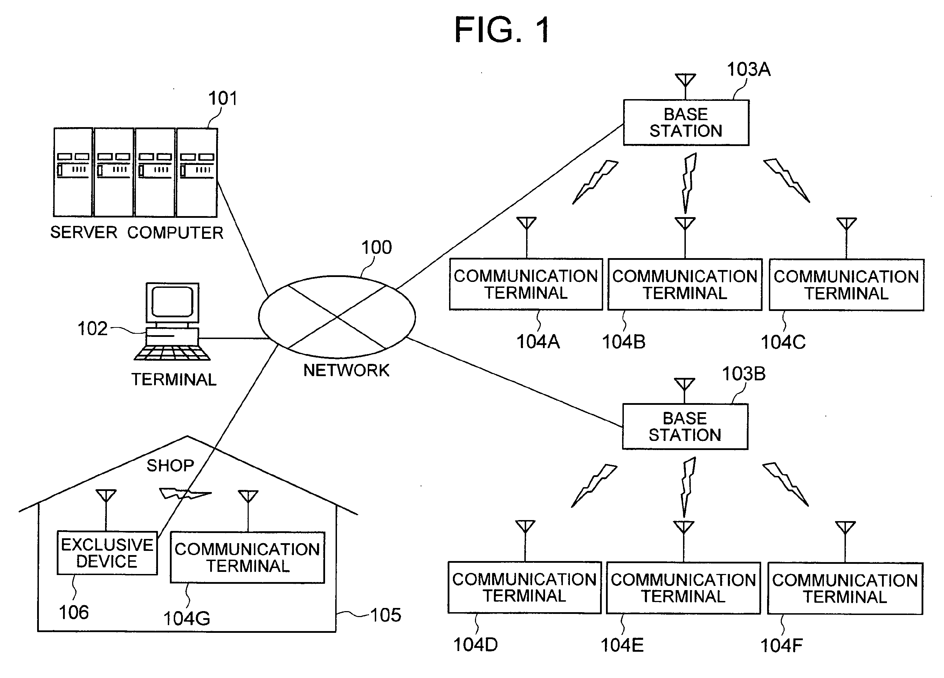

Fig. 1 shows a configuration of an entire communication system. An advertiser, who has a server computer 101 connected to a network 100 such as the Internet, manages base stations 103A and 103B and an exclusive or dedicated device 106. The advertiser request an advertisement company to distribute an advertisement. Each of the base stations 103A and 103B holds the advertisement information requested by the advertiser therein, mounts a short-distance radio communication system typically such as a bluetooth system having a maximum transmission range of about 10-100m, finds a portable communication terminal or terminals present in a communicatable range, and transmits the advertisement information thereto. The advertisement company installs such base stations in potentially-high-advertisement effect areas such as areas in front of stations or at the peripheries of convenience stores where many users are present. In this conjunction, a base station already installed for portable telephone or PHS may be used also as the aforementioned base station.

In the drawing, communication terminals 104A, 104B and 104C indicate portable communication terminals present within the radio data communicatable range of the base station 103A; whereas communication terminals 104D, 104E and 104F indicate portable communication terminals present within the radio data communicatable range of the base station 103B. Each of the portable communication terminals 104A to 104G, which is equipped with a short-distance radio communication system, receives the advertisement information from the associated base station and displays it for its user. A shop 105 associated with the advertisement has the exclusive device 106 which is installed thereat and is equipped with a short-distance radio communication system. In this connection, the "exclusive device" may be any general-purpose device, e.g., an information processing terminal such as a personal computer (PC) or a workstation (WS), so long as it has functions which follow. The exclusive device 106 is lent, for example, from the advertisement company to the shop 105. When the user received the advertisement information from the base station to his communication terminal 104G and this resulted in his drop in at the shop 105, the exclusive device 106 automatically performs data communication with the communication terminal 104G in a short-distance radio wave manner, and confirms the fact that the communication terminal 104G received the advertisement information of the shop 105 from the base station. The exclusive device 106 stores the total number of users who visited the shop 105 after reception of the advertisement information from the base station as an advertisement effect, and informs the server computer 101 of the advertisement effects generated within a period of time determined by the advertisement company or within a period of time (e.g., one month) determined between the advertisement company and advertiser at intervals of the determined period time via the network 100. The advertisement company charges the advertiser with an advertisement fee for the advertisement effects.

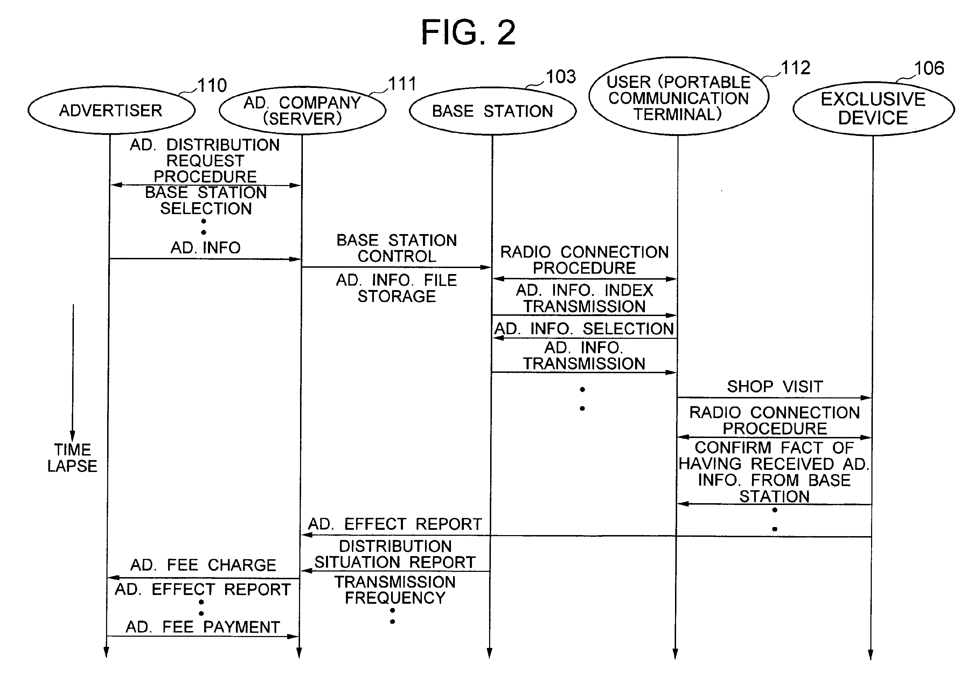

Fig. 2 summarizes mutual operations among an advertiser 110, an advertisement company 111, the base station 103, a user 112 and the exclusive device 106, from an advertisement distribution request procedure of the advertiser 110 to the advertisement company 111 to the charge of the advertisement fee from the advertisement company 111 to the advertiser 110. The advertiser 110 asks the advertisement company 111 to take a procedure of, e.g., an advertisement distribution request via the network 100. The procedure includes designation of the base station for advertisement distribution, and the advertiser 110 can also conduct the procedure by telephone or FAX or in the form of a mailed document. After completing the advertisement distribution request procedure, the advertiser 110 the advertisement information to be distributed to the advertisement company 111, e.g., by way of the network 100. The advertisement information, which is made up of a text and an image, may be described or expressed in a format adapted for being displayed on the display section of the portable communication terminal or just text and image per se, not adapted for being displayed. In the latter case, the advertisement company 111 may perform the format conversion by converting the received advertisement information so as to conform to the allowable format. In the latter case, the advertisement company 111 can demand its conversion cost from the advertiser. Next the advertisement company 111 transmit the advertisement information described in the above format to the specified base station 103 via the network 100. The base station 103 establishes a radio connection with the portable communication terminal possessed by the user 112 present within the radio communicatable range and then prompts the user 112 to select the advertisement information. The user 112 selects and receives the advertisement information using his portable communication terminal. At this time, the portable communication terminal holds therein the fact that it received the advertisement information. When the reception of the advertisement information by the user 112 resulted in his drop-in at a shop associated with the advertisement, the exclusive device 106 installed at the shop establishes a radio connection with the portable communication terminal and thereafter confirms the fact that the terminal received the advertisement information from the base station 103. The exclusive device 106 informs the advertisement company 111 of advertisement effects generated within the predetermined period of time at intervals of the period time.

In this conjunction, the advertisement effects include the total number of users who drops in at the shop after reception of the advertisement information from the base station and a total sum of sales generated by the users. The advertisement company 111 calculates an advertisement fee on the basis of the advertisement effects and demands it of the advertiser 110. The advertiser 110 pays the demanded fee to the advertisement company 111, e.g., via any bank.

In this connection, the charging method according to the advertisement effects are considered to include a charging method based on the total number of users who visited the shop after reception of the advertisement information from the base station, a method of collecting a money amount corresponding to a percentage of sales as an advertisement fee when such users actually bought, and a charging method based on the number of some contracts established by the users. The charging method to be used depends on the type of the shop associated with the advertisement information.

Accordingly, the advertisement-fee charging method is determined between the advertisement company and advertiser when the advertiser conducts the advertisement-information distribution request procedure to the advertisement company. Other charging methods based on the advertisement effects are considered to include a charging method based on the frequency of transmission of such advertisement information from the base station to the portable communication terminal, a method for charging a fixed money amount at intervals of a constant period of time, and a charging method of a combination of the above methods based on the advertisement effects.

In this connection, when the charging method based on the frequency of transmission of the advertisement information is employed, prior to calculation of an advertisement fee by the advertisement company, the base station informs the advertisement company of the frequency (distribution situation) as shown in Fig. 2.

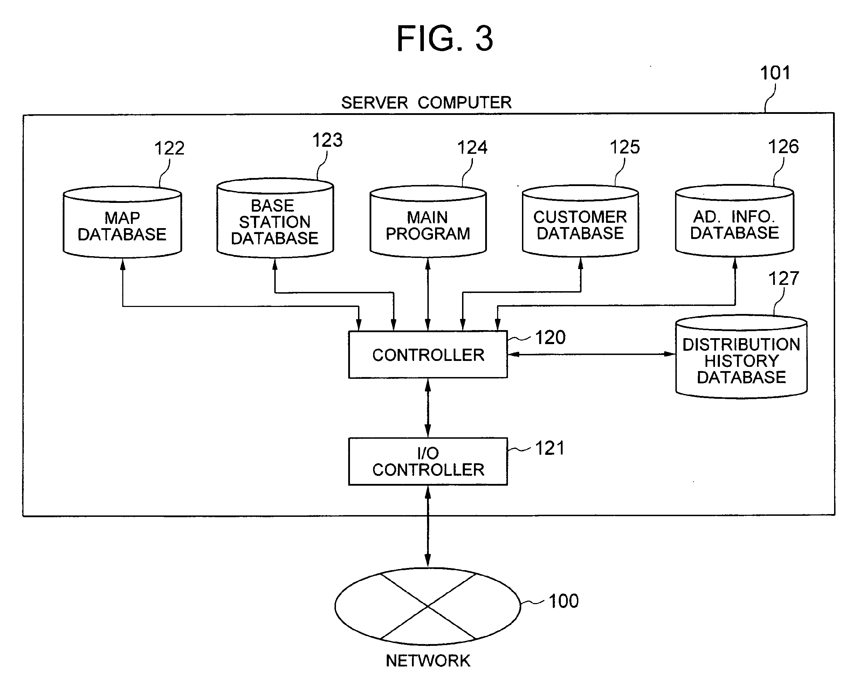

Explanation will next be made as to a detailed structure of each of the constituent elements of the communication system shown in Fig. 1. The operations of the constituent elements will be all explained layer. Fig. 3 is a block diagram of a detailed structure of the server computer 101 possessed by the advertisement company. A controller 120, which is formed as a CPU or the like, performs various sections, data transfer, temporary storage of data, etc. An input/output controller 121 controls data communication with a terminal and base station used by an advertiser and also with an exclusive device installed at each shop. A memory 124 stores therein a main program. The main program, which is used by the controller 120, includes, for example, a program for displaying an advertisement distribution request procedure on a display section of the terminal used by the advertiser, a program for distributing advertisement information or the like to a base station, and a program for calculating an advertisement fee on the basis of advertisement effects reported by the exclusive device installed at each shop. A storage 122 stores therein map data. The map data is used in the advertisement distribution request procedure when the advertiser specifies a base station to which advertisement distribution is carried out. The map data has, e.g., such a hierarchy or layered structure as follows. That is, an upper layer includes a Japanese map, a middle layer includes maps of metropolitan, Hokkaido, Osaka, and prefectural areas, and a lower layer includes maps of divisions (such as city, town, village, business or shopping quarter). On the lower layer map, locations where base stations are installed are marked and the controller 120 updates the base station locations as necessary with use of a base station database stored in a storage 123.

In this connection, the maps on the respective layers are stored in the form of a format such as bip map or vector format which allows the maps can be displayed on the display section of the terminal used by the advertiser. The storage 123 stores therein files relating to the respective base stations. The files about the base stations include ID's and locations of the base stations, ID's of advertisement information currently being distributed from the base stations, as data unique to the respective base stations. Stores in a storage 125 are customer files. The customer files, which are information about respective advertisers, include information unique to the respective advertisers such as registers ID's, passwords, advertiser private data and advertisement information ID's.

Among the customer information, the advertiser private data includes representative name, address to be contacted, telephone number, FAX number and E-mail address. Stores in a storage 126 are advertisement information files. Each advertisement information file includes advertisement information ID, shop information, base station ID specified for distribution and advertisement information to be actually transmitted to the associated portable communication terminal. Among the above information, the shop data includes shop name, address, telephone number, fax number and shop type ID as various information about the shop.

The advertisement information to be actually transmitted to the portable communication terminal includes two versions, that is, simple and detailed versions. The simple version of advertisement information includes a less amount of data, e.g., only text, taking into consideration a data communication time between the base station and portable communication terminal, a power consumption of the terminal, etc.

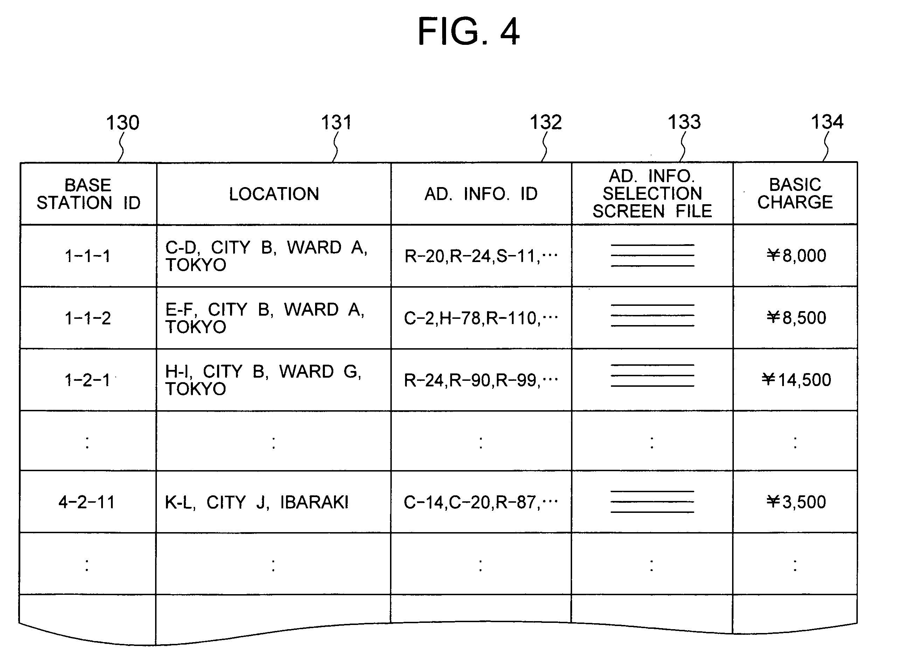

The detailed version of advertisement information, on the other hand, includes, e.g., goods photographs or an image of a peripheral map of the shop indicating the location of the shop. The simple and detailed version of advertisement information are both described in a format such as HTML or WAP which allows the information to be displayed on the display section of the terminal. The advertisement information is held also held even in the respective base stations specified by the advertiser. Stores in a storage 127 are distribution history files. Each distribution history file is a history record of distributions of the advertisement information from the specified base station to the user, and includes advertisement information ID, base station ID to which the advertisement information is distributed, and a date at which the base station transmitted the information to the portable communication terminal. The distribution history file is used, for example, when the advertisement company charges the advertiser with an advertisement fee based on the frequency of transmission of the advertisement information from the base station to the portable communication terminal, or when the advertisement company offers the file to the advertiser as marketing information. Thus when the distribution history file is unnecessary, the storage 127 can be removed. Fig. 4 shows files on respective base stations stored in the storage 123, for example, in the form of a database as a collection of the files. In the drawing, reference numeral 130 denotes base station ID, numeral 131 denotes the location of the base station, 132 denotes ID's of all advertisement information currently being distributed from the base station, 133 denotes an advertisement information selection screen file to be transmitted to the portable communication terminal from the base station, and 134 denotes the basic charge of an advertisement fee set for the base station. For example, a base station having a base station ID of "1-1-1" is located in "Tokyo, Ward A, Town C-D", is currently distributing advertisement information "R-20", "S-24", "S-11" and so on, and its advertisement fee basic charge is "¥8,000". In this connection, the advertisement fee basic charge 134 is a advertisement fee which the advertisement company demands when a single piece of advertisement information was distributed for a fixed period of time (e.g., for one month), and is fixed regardless of its advertisement effects. The advertiser pays the advertisement company, e.g., a money amount corresponding to a sum of the basic charge and an advertisement fee based on the advertisement effects. As one way of setting the advertisement basic charge, it is considered to set the advertisement basic charge higher for a base station installed in a location where a higher advertisement effect is expected.

An advertisement information selection screen file 133 is described in a format such as HTML or WAP which allows the file to be displayed on the display section of the portable communication terminal. The file is transmitted to the portable communication terminal from the base station to prompt the user to select the advertisement information. The server computer 101 manages the above file at each base station and, when a change such as a new addition is required to the advertisement information to be distributed from the base station, edits the file.

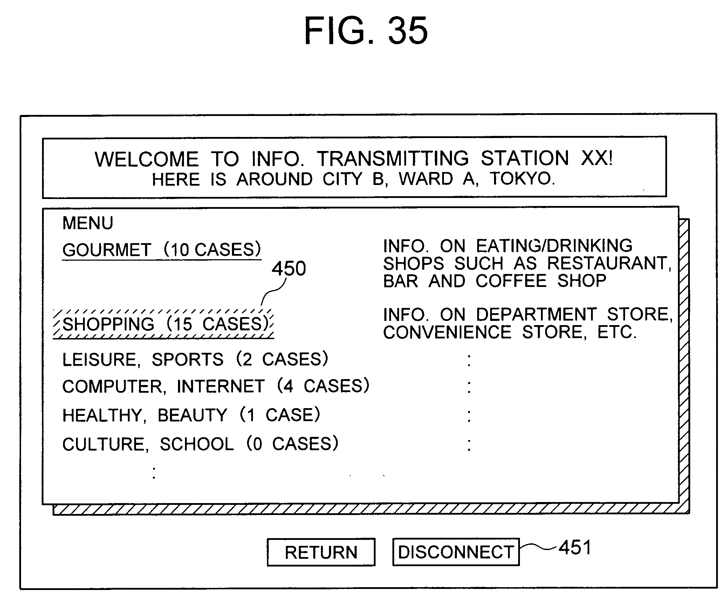

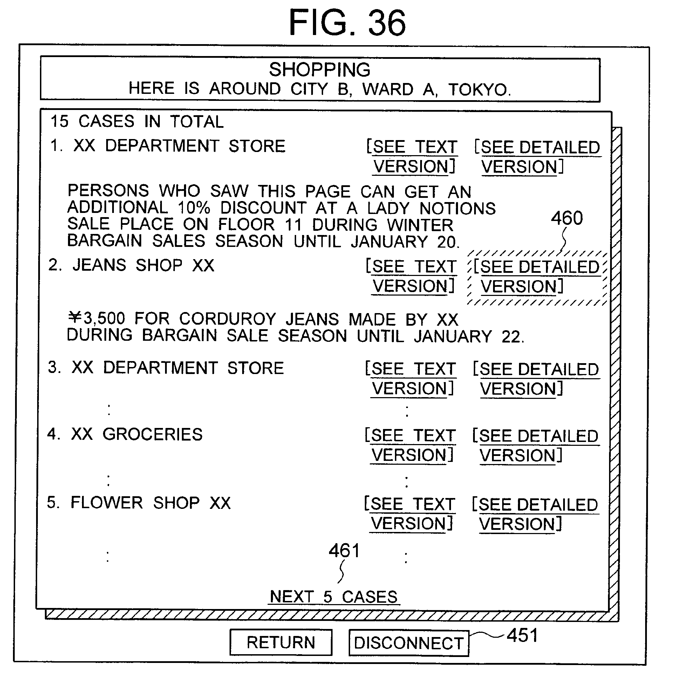

An example of the advertisement information selection screen file to be displayed on the display section of the portable communication terminal is shown in Figs. 35 and 36. The advertisement information selection screen file includes a plurality of files having such a top page as shown in Fig. 35 and such an advertisement information list page for each category as shown in Fig. 36. User's operations on the advertisement information selection screen will be explained later.

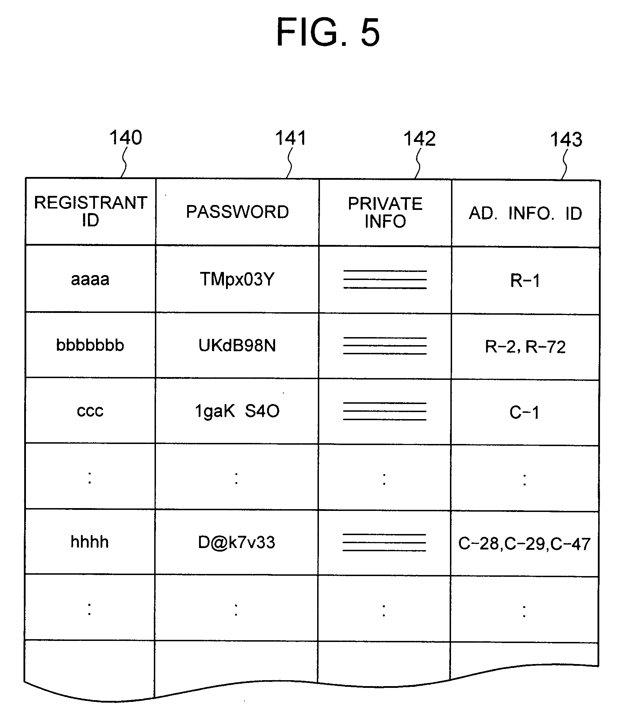

Fig. 5 shows an example of a database as a collection of customer files stored in the storage 125. In the drawing, reference numeral 140 denotes register ID, numeral 141 denotes the password of the advertiser, 142 denotes the private information about the advertiser, and 143 denotes the ID's of all advertisement information which the advertiser currently asks the advertisement company to distribute.

For example, an advertiser having a register ID of "aaaa" has a registered password of "TMpx03Y" and currently asks the advertisement company to distribute the advertisement information of "R-1". In Fig. 5, presence of a plurality of advertisement information ID's for a single register means that the register asks the advertisement company to distribute a plurality of different advertisement information.

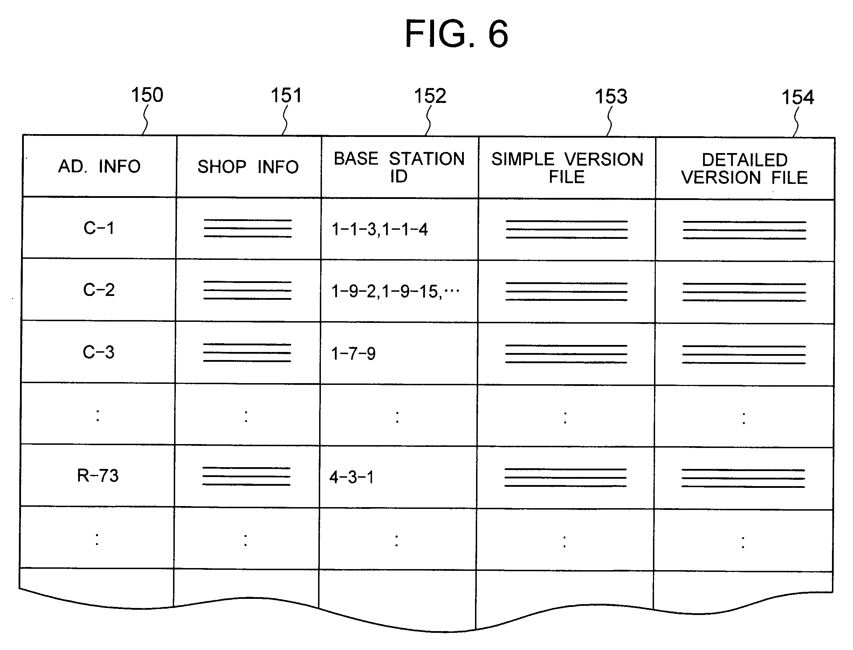

Fig. 6 shows an example of a database as a collection of advertisement information files stored in the storage 126. Reference numeral 150 denotes the ID of advertisement information, numeral 151 denotes shop information, 152 denotes the ID's of all base stations which distribute the advertisement information, 153 and 154 simple and detailed files of the advertisement information respectively. For example, advertisement information having an advertisement information ID of "C-1" is distributed by the base stations "1-1-3" and "1-1-4". In Fig. 6, the shop type ID is included in the advertisement information ID.

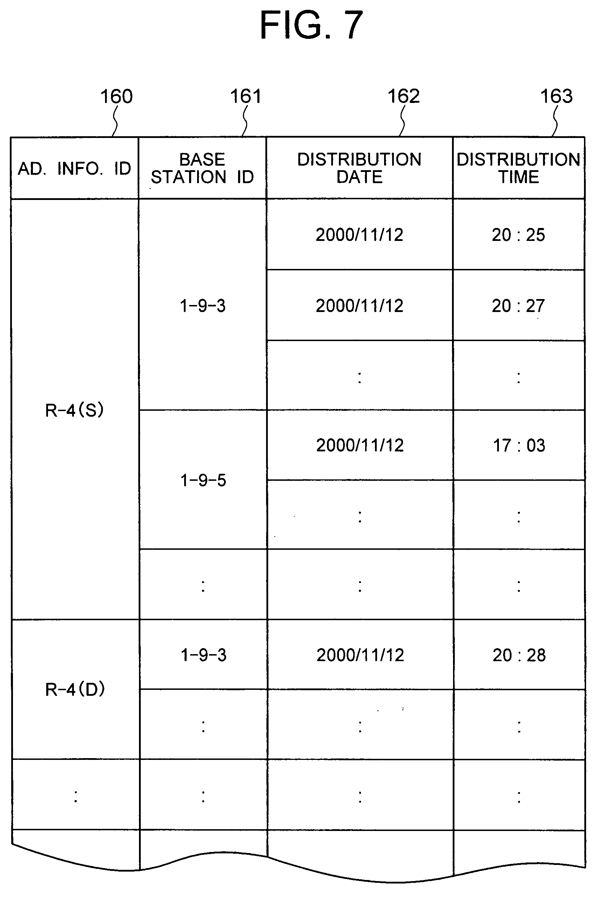

Fig. 7 shows an example of a database as a collection of distribution history files stored in the storage 127. In the drawing, reference numeral 160 denotes the ID of advertisement information, numeral 161 denotes the ID of a base station which distributed the advertisement information, 162 denotes a date on which the base station distributed the information, and 163 denotes a time at which the base station distributed the information. Parentheses (S) and (D) in the advertisement information ID 160 indicates simple and detailed versions respectively. For example, the simple version having advertisement information of "R-4" means that the advertisement information was distributed from a base station "1-9-3" at "20 (hour):25 (minute)" on "November 12, 2000".

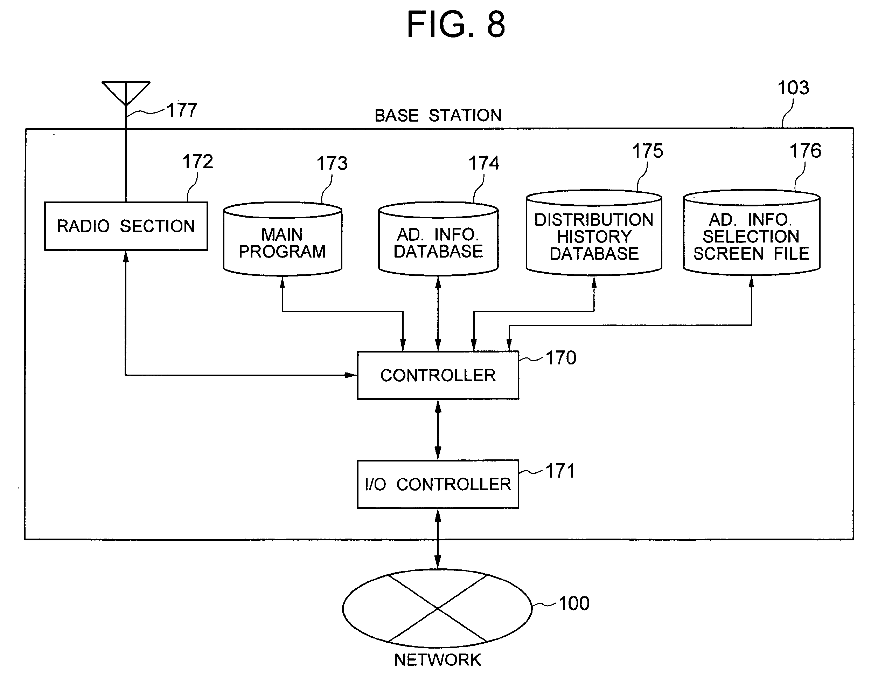

Fig. 8 shows a block diagram of a detailed structure of a base station 103A or 103B (which will be referred to simply as the base station 103 as its representative, hereinafter). A controller 170 performs control over respective constituent elements including a CPU. An input/output controller 171 controls data input/output to and from the server computer 101 connected via the network 100 such as the Internet. A radio section 172 controls data communication with a portable communication terminal via an antenna 177 on a determined short-distance radio communication basis, and has a means for finding portable communication terminal or terminals present within a data communicatable distance range. In this case, a unique device address is assigned to the radio section 172 to make distinction from the radio sections of the other devices. For example, the Bluetooth Specification v1.0B prescribes that a device address of 48 bits acquired by the IEEE802 Standardization Organization is assigned to each bluetooth device. The antenna 177 inputs and outputs a radio signal under control of the radio section 172. Storages 173 to 176 store therein files which follow respectively. The storage 173 stores therein a main program. The main program is used in the controller 170. The main program includes, for example, a program for receiving advertisement information from the server computer 101 and registering it in an advertisement information database 174, a communication protocol based on the predetermined short-distance radio communication scheme for radio data communication with the portable communication terminal, and a program for transmitting the advertisement information to the portable communication terminal. The storage 174 stores therein advertisement information files. The advertisement information file relates to advertisement information to be distributed and includes advertisement information ID, and simple and detailed version advertisement information. The storage 175 stores therein distribution history files. The distribution history file, which records which advertisement information distributed by the base station 103 at which time, includes advertisement information ID and distribution date. As already mentioned above, when the distribution history file becomes unnecessary, the storage 175 becomes unnecessary. The storage 176 stores therein advertisement information selection screen files. The advertisement information selection screen file is the same as the advertisement information selection screen file of the base station 103 registered in the base station database 123 of the server computer 101.

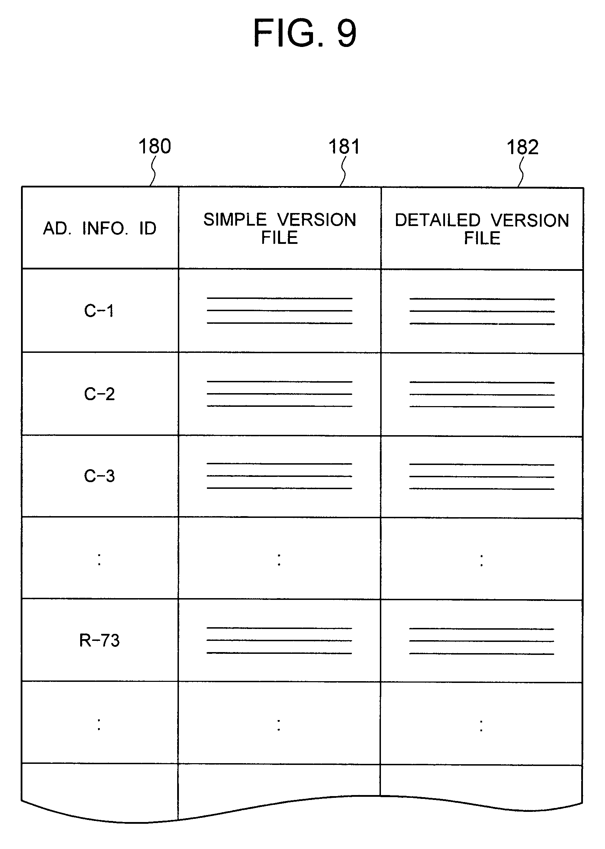

Fig. 9 shows an example of a database as a collection of advertisement information files stored in the storage 174. In the drawing, reference numeral 180 denotes the ID of advertisement information, numerals 181 and 182 denote simple and detailed versions of the advertisement information respectively.

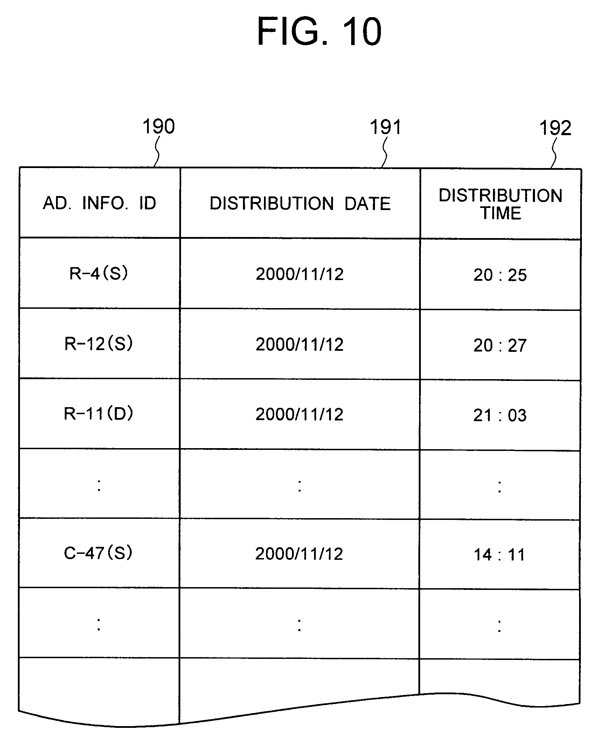

Fig. 10 shows an example of a database as a collection of distribution history files stored in the storage 175. In the drawing, reference numeral 190 denotes the ID of advertisement information, numeral 191 denotes a date on which the advertisement information was distributed, and 192 denotes a time at which the advertisement information was distributed. Parentheses (S) and (D) in the advertisement information ID indicate that the associated advertisement information are the simple and detailed versions respectively. For example, the simple version of advertisement information "R-4" indicates that the information was distributed at "20:25" on "November 12, 2000".

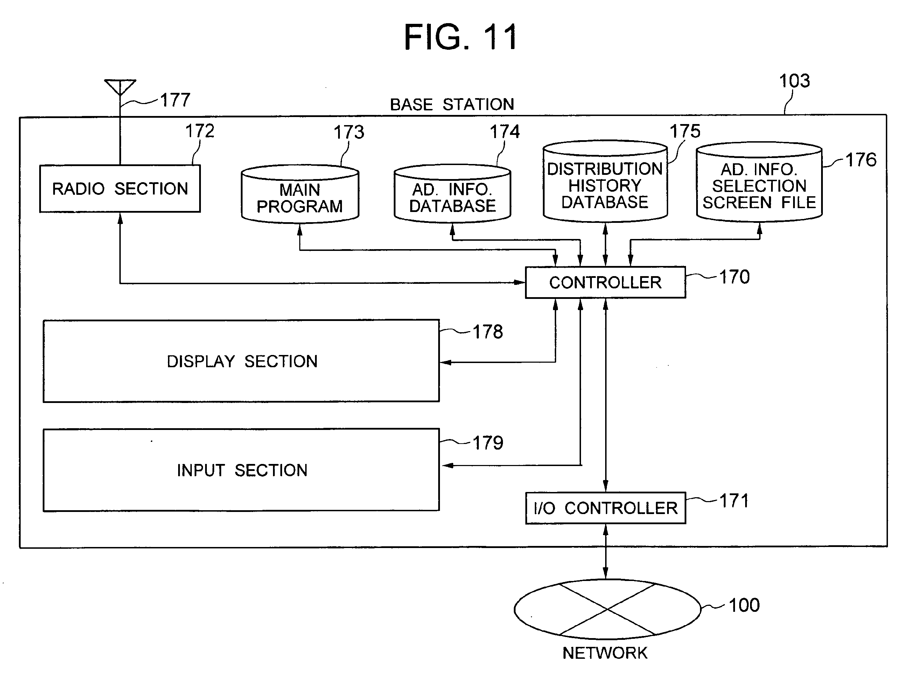

Fig. 11 is another block diagram of the detailed structure of the base station 103. In the drawing, parts having the same functions as those in Fig. 8 are denoted by the same reference numerals. A display section 178 and input section 179 as parts different those from Fig. 8 will be explained. The display section 178 is used to display, for example, information or a screen indicating to the user that the base station 103 distributes the advertisement information, information or a screen for selection of the advertisement information and the advertisement information. The display section may be of a liquid crystal type or the like. The input section 179, which is used for the user to enter data, is, for example, a touch panel.

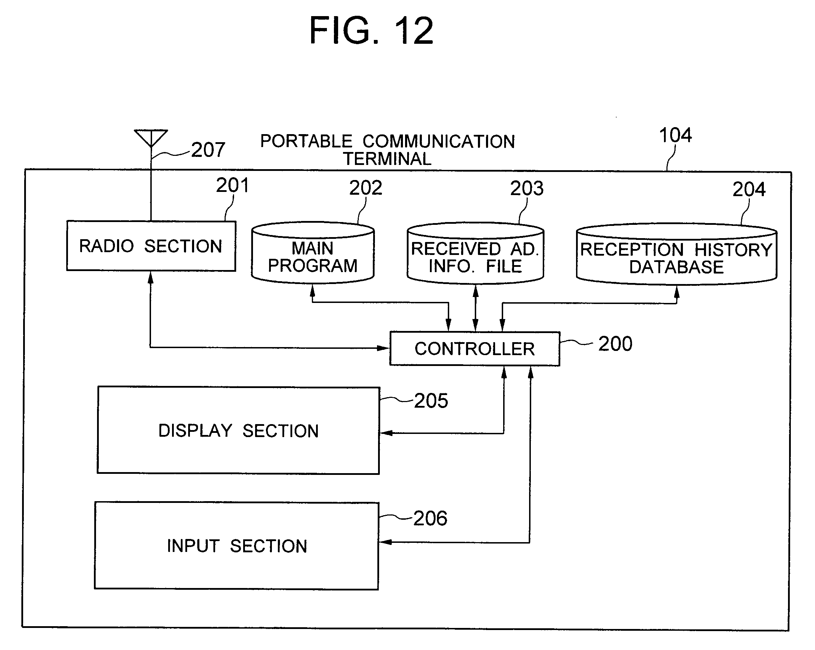

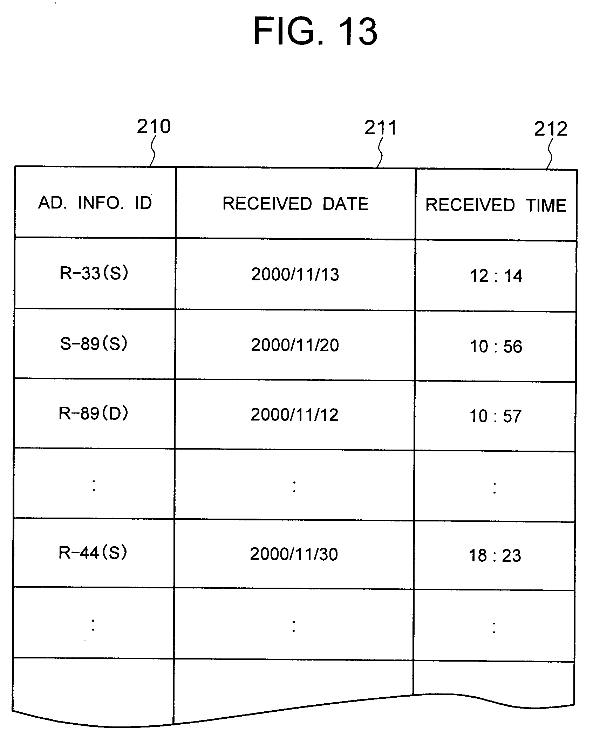

Fig. 12 is a block diagram of a detailed structure of representative one of portable communication terminals 104A to 104G (which will be referred to simply as the portable communication terminal 104, hereinafter). A controller 200, which comprises a CPU, performs control over respective constituent elements of the terminal. As in the radio section 172 in Fig. 8, a device address is assigned to a radio section 201 on the predetermined short-distance radio communication scheme. The radio section 201 controls data communication with the base station or exclusive device and has a means for finding a base station or stations present within its data communicatable distance range. An antenna 207 inputs and outputs a radio signal under control of the radio section 201. The display section 205, which displays thereon, e.g., advertisement information received from the base station, may be of a liquid crystal type or the like. An input section 206, which is used for the user to enter data, comprises a keyboard or a pen as an input means of a small size information processor such as a portable telephone. Storages 202 to 204 stores therein files which follow respectively. The storage 202 stores therein a main program. The main program, which is used in the controller 200, includes, e.g., a communication protocol based on the predetermined short-distance radio communication scheme for radio data communication with the base station or exclusive device, a program for selectively receiving advertisement information from the base station and displaying it on the display section 205, and a program for recording of the fact of having received the advertisement information from the base station in the storage 204. Stored in the storage 203 are received advertisement information files. The received advertisement information files are simple or detailed version of information received in past. The owner of the communication terminal 104 can selectively display the received advertisement information on the display section 205 as necessary and can erase, as necessary, the received advertisement information which became unnecessary. The storage 204 stores therein received history files. The received history file, which records which advertisement information received from the base station at which time, includes the ID of the advertisement information and the received date. When the owner (user) of the portable communication terminal 104 dropped in at a shop, the exclusive device installed at the shop confirms whether he received the advertisement information of the shop onto his terminal, with use of the received history file. Fig. 13 shows an example of a database as a collection of the receive history files stored in the storage 204. In the drawing, reference numeral 210 denotes the ID of advertisement information, numeral 211 denotes a date on which the advertisement information was received, and 212 denotes a time at which the advertisement information was received. Parentheses (S) and (D) in the advertisement information ID indicate that the associated advertisement information are of simple and detailed versions respectively. For example, the simple version advertisement information "R-33" indicates that the information was received at "12 (hour): 14 (minute)" on "November 13, 2000".

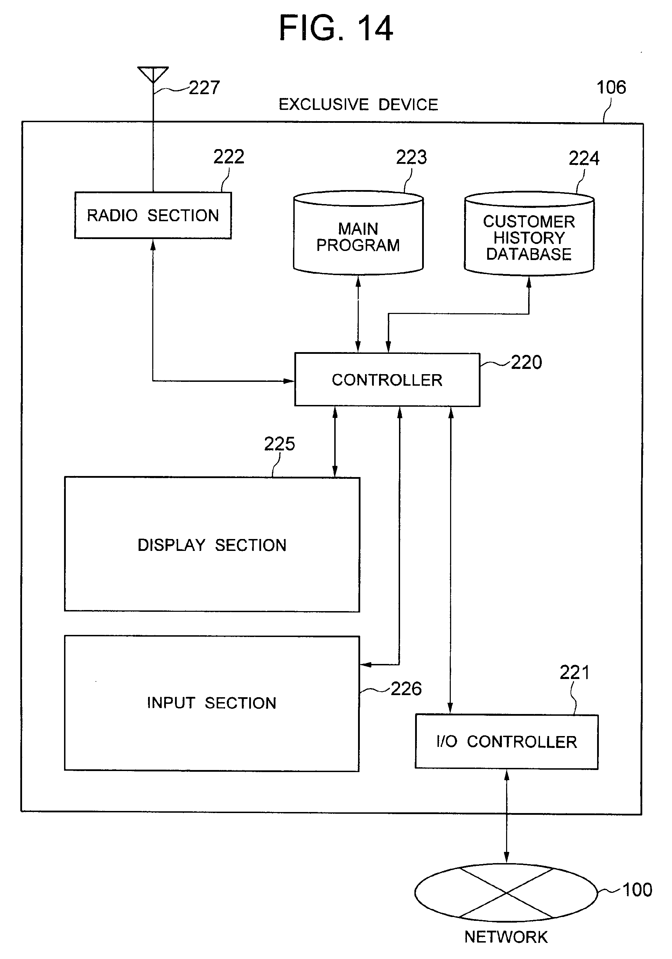

Fig. 14 is a block diagram of a detailed structure of the exclusive device 106 installed at the shop 105. A controller 220, which comprises a CPU or the like, performs control over respective constituent elements of the device. An input/output controller 221 control data communication with the server computer 101 connected via the network 100 such as the Internet. As in Figs. 8 and 12, a device address is allocated to a radio section 222 based on the predetermined short-distance radio communication scheme. The radio section 222, which functions to control data communication with the portable communication terminal via an antenna 227, has a device for finding a portable communication terminal or terminals present within its data communicatable distance range. The antenna 227 inputs and outputs a radio signal under control of the radio section 222. A display section 225, which is used to display various messages thereon, may comprise a liquid crystal display. An input section 226, which is used for an operator of the exclusive device 106 to enter data, may comprise, e.g., a keyboard or pen. Storages 223 and 224 stores therein files which follow respectively. The storage 223 stores therein a main program. The main program, which is used by the controller 220, includes, for example, a communication protocol based on the predetermined short-distance radio communication scheme for radio data communication with the portable communication terminal, a program for confirming whether or not the portable communication terminal received the advertisement information of the shop 105 from the base station, and a program for reporting its advertisement effects to the server computer 101. The storage 224 stores therein customer history files. The customer history file, which is used when the advertisement effects are reported to the server computer 101, includes a date on which the user after receiving the advertisement information of the shop 105 from the base station actually dropped in at the shop 105, and the amount of sales by the user at that time.

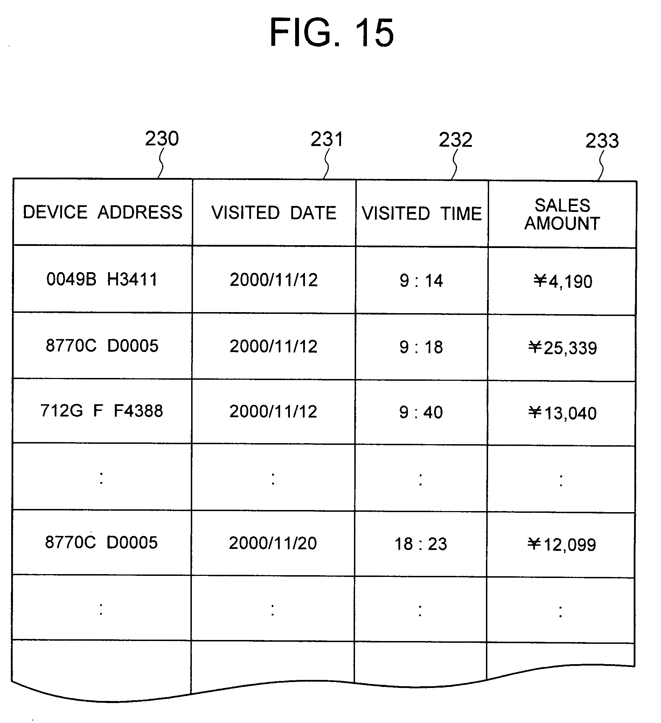

Fig. 15 is an example of a database as a collection of the customer history files stored in the storage 224. In the drawing, reference numeral 230 denotes a device address allocated to the radio section of the portable communication terminal possessed by the user who visited the shop 105, numeral 231 denotes a data on which the user visited, 232 denotes a time at which the user visited, and 233 denotes the amount of sales by the user. The drawing indicates, for example, that the possessor or user of the portable communication terminal having a device address "0049 BH3411" allocated thereto visited the shop 105 at "9 (hour): 14 (minute)" on "November 12, 2000" and his visit resulted in a total sale of "¥4,190".

Explanation will next be made as to the operations of the respective constituent elements of the communication system shown in Fig. 1.

Explanation will first be made as to the operation of the server computer 101.

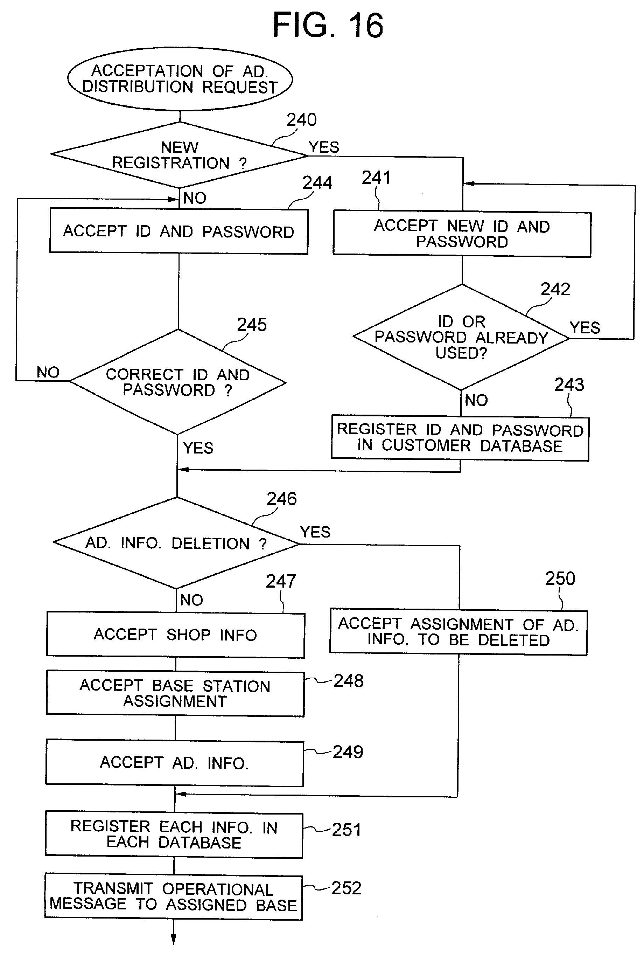

Fig. 16 shows a flowchart for explaining the operation of the server computer 101 when an advertiser asks an advertisement company to conduct an advertisement distribution request procedure with use of the terminal 102 via the network 100. The advertisement distribution request procedure includes new addition of advertisement information to be distributed, deletion of advertisement information already being distributed, and modification of the advertisement information.

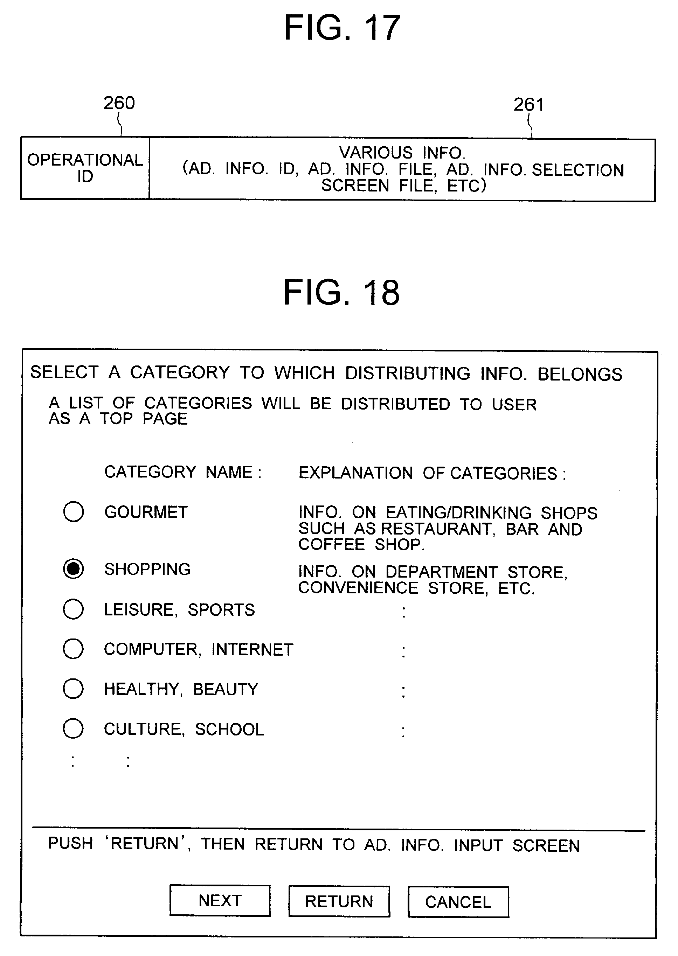

The modification of the advertisement information includes modification of shop information, change of the base station for information distribution, and modification of contents of simple/detailed version advertisement information. The advertisement distribution request procedure which will be explained below, is fully carried out by means of the server computer 101 which displays the various advertisement distribution request procedure on the display section of the terminal 102 connected via the network 100 to cause the advertiser to operate the terminal 102 according to the screen display. When the terminal 102 is connected to the server computer 101, the controller 120 performs operations which follow according to the main program stored in the storage 124. First of all, the server computer examines whether or not the advertiser is a new advertisement distribution requester (step 240). If the requester is a new registrant, then the server computer prompts him to become a new registrant. In the new registration procedure, the computer first receives his registrant ID and password (step 241). To avoid double registration, the computer examines whether or not the received registrant ID or password is already used by another advertiser (step 242). If so, then the computer prompts the new registrant to send a different registrant ID or password. If the registrant ID and password are not used by the other advertisers, then the computer creates a customer file on the basis thereof and registers them in the customer database 125 (step 243). When the advertisement is not a new registrant, the computer receives his already-allocated registrant ID and password (step 244) and examines whether or not they are correct (step 245). Next, the computer examines whether or not contents of advertiser's request is to delete the advertisement information (step 246). If it is not to delete the information, then the computer accepts new addition or modification of shop information to be advertised, information about selection/specification of a base station for advertisement information distribution and simple/detailed version information (steps 247, 248 and 249). When the request contents to delete the advertisement information, on the other hand, the computer accepts the specification of the advertisement information to be deleted (step 250). At this stage, the procedure is completed between the advertiser and server computer 101. The server computer 101 then executes operations which follow. On the basis of the information accepted at the steps 247, 248 and 249 or accepted at the step 250, the computer newly creates an advertisement information file, modifies or deletes the associated advertisement information file; and registers the modified part in the advertisement information database 126, base station database 123, and customer database 125 (step 251). In this connection, among the modified part of the base station database 123, the computers edits the advertisement information selection screen files of the base station specified at the step 249 only with respect to one file or files associated with the modification. With respect to the advertisement information already being distributed, when it is desired to change the base station for distribution of the advertisement information, the computer modifies the corresponding items in the base station database 123 and advertisement information database 126. Finally, the computer transmits to the specified base station an operational message conforming to such a format as shown in, e.g., Fig. 17 (step 252). In the drawing, an operational ID is stored in a field 260, the operational ID is an identifier indicative of operational contents, e.g., indicative of deletion, new addition or modification of the advertisement information. In the step 252, when the operational contents is to new addition or modification of the advertisement information the computer stores the operational ID corresponding to the operational contents in the field 260, stores the newly-created or modified advertisement information file as well as the edited advertisement information selection screen file in a field 261, and then transmits it to the specified base station. When the base station for distribution of the advertisement information was changed in the step 248, the computer transmits to the newly-specified base station an operational message indicative of new addition of advertisement information as its operational contents, and also transmits to the base station so far used for the advertisement information distribution an operational message indicative of deletion of the advertisement information as its operational contents. When the advertisement information to be deleted is specified in the step 250, the computer transmits to the base station so far used for distribution of the advertisement information an operational message indicative of deletion of the advertisement information as its operational contents (step 252).

Fig. 18 is a display on the display section of the terminal 102 in the step 247, showing an exemplary display to specify the type of a shop to be advertised. In the drawing, a list of categories are used for the base station to prompt the user to select advertising information, as shown, e.g., in Fig. 35.

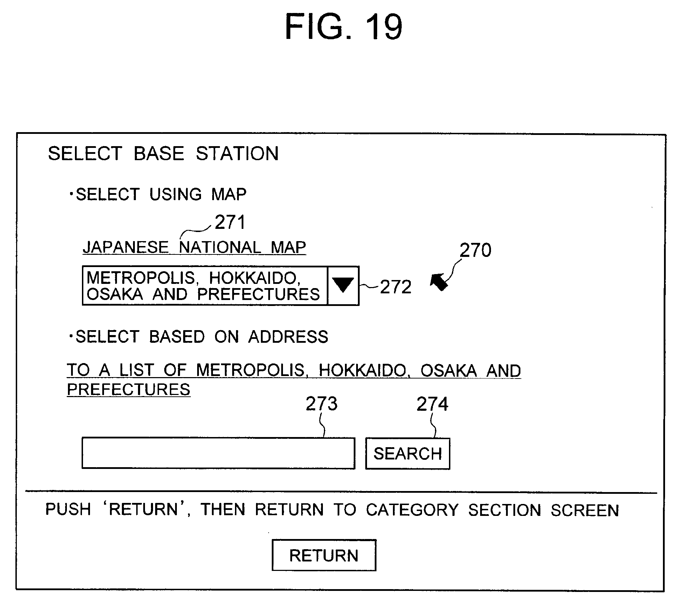

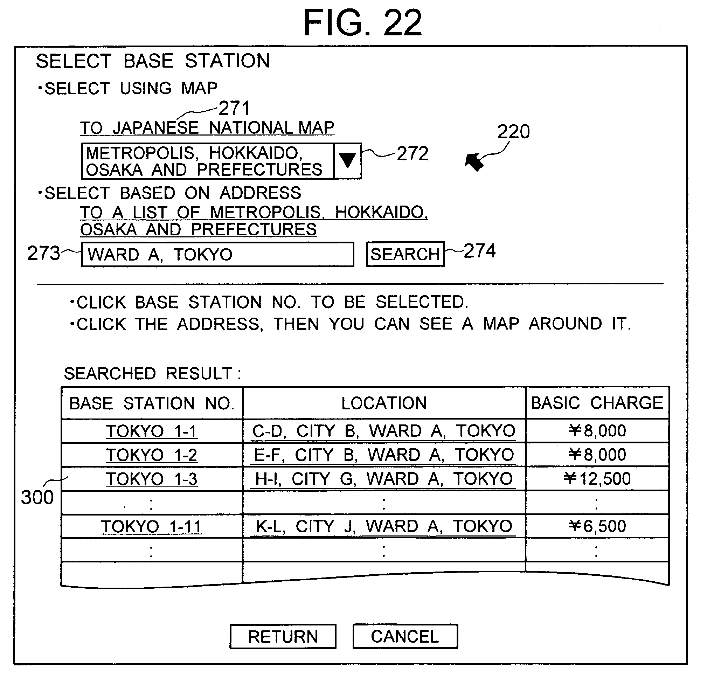

Figs. 19 and 22 are information displayed on the display section of the terminal 102 in the step 248, for selection of a base station for distribution of the advertisement information. Various operations are carried out by the advertiser who positions a mouse cursor 270 at a desired location on the display screen and clicks it. In Fig. 19, for example, when the advertiser wishes to specify a base station while looking at a map, he clocks a text 271. This causes the controller 120 to display a Japanese map on the display section of the terminal 102 on the basis of the upper layer map data stored in the storage 122. On the Japanese map, the advertiser clicks the vicinity of a location at which he wishes to specify as the installation location of the base station. This causes the controller 120 to display a map of metropolitan, Hokkaido, Osaka or prefecture corresponding to the clicked location on the basis of middle layer map data stored in the storage 122.

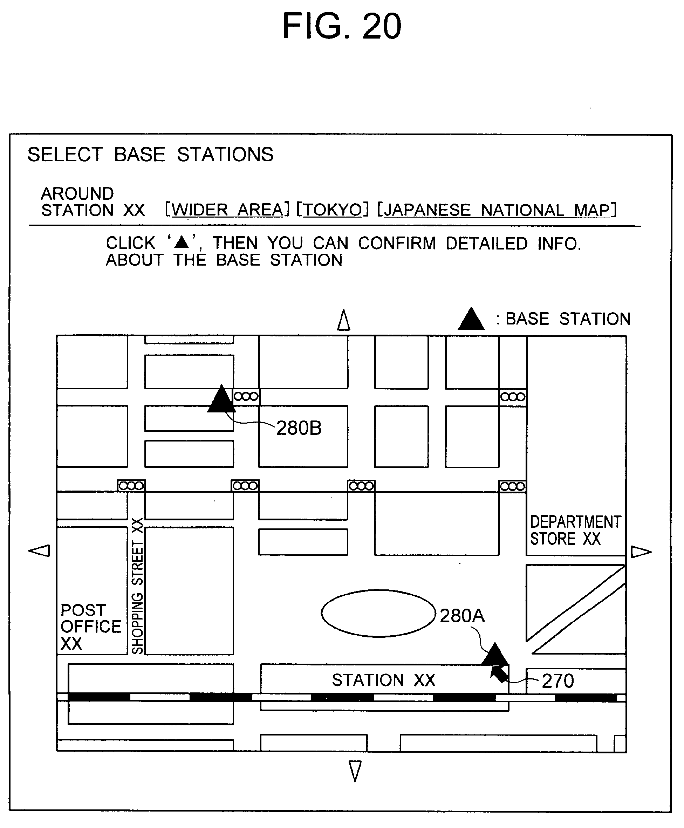

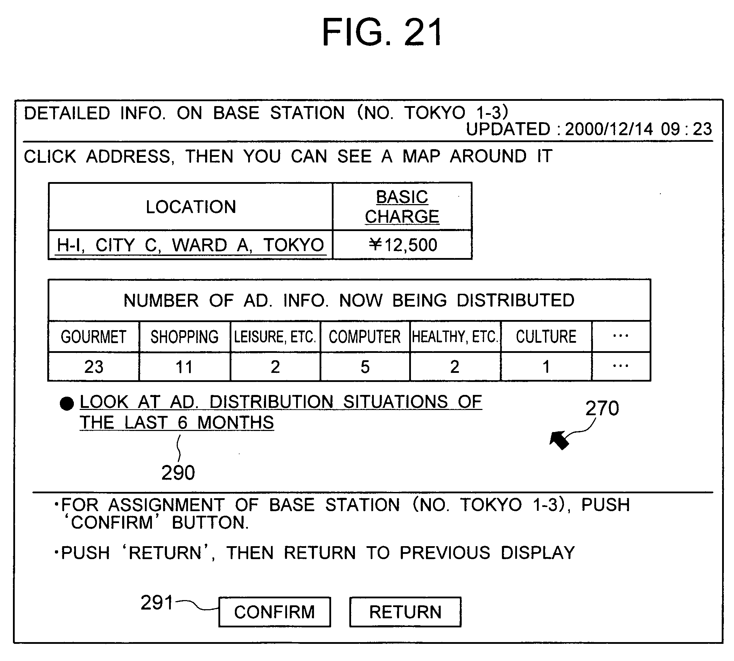

In Fig. 19, when the advertiser wishes to specify the base station on the map of metropolitan, Hokkaido, Osaka or prefecture, he put the mouse cursor 270 on a button mark 272 and clicks a mouse button, thus appearing a list of metropolitan, Hokkaido, Osaka and prefectures. While keeping the above condition appeared by the clicked button, he puts the mouse cursor mouse cursor 270 on desired one of the metropolitan, Hokkaido, Osaka and prefectures and then releases it, which results in appearance of a map corresponding to the desired one of the metropolitan, Hokkaido, Osaka and prefectures. As shown in Fig. 20, the controller 120 eventually displays a detailed map having marks where base stations are installed on the basis of the lower layer map data stored in the storage 122. In Fig. 20, marks 280A and 280B indicate the installation locations of base stations. By clicking the mark, the advertiser can confirm detailed information relation to the base station corresponding to the clicked mark as shown in Fig. 21. In Fig. 21, when the an advertiser clicks a text 290, this causes the controller 120, on the basis of the storage 127, to display on the display section of the terminal 102 the distribution situation of the base station such as, for example, the frequency of transmission of the advertisement information for each category for the latest 6 months. The advertiser can specify the base station by clicking a confirmation button 291.

In Fig. 19, when the advertiser wants to select a base station on the basis of its address, enters a part of the address in an input box 273 and clicks a button 274; the controller 120 searches the base station database 123 for a location 131 and displays a list of base stations installed at a location containing the text entered in the input box 273. Fig. 22 shows a search result when "Tokyo, Ward A" is entered in the input box 273. In the drawing, when the advertiser clicks a text 300 to specify a base station having a base station number of "Tokyo 1-3", such a display as shown in Fig. 21 appears. The advertiser can specify the base station by clicking the confirmation button 291. In Fig. 22, when the advertiser clicks a text 301, the controller 120 displays such a map of a vicinity of the base station having the station number of "Tokyo 1-3" as shown in Fig. 20.

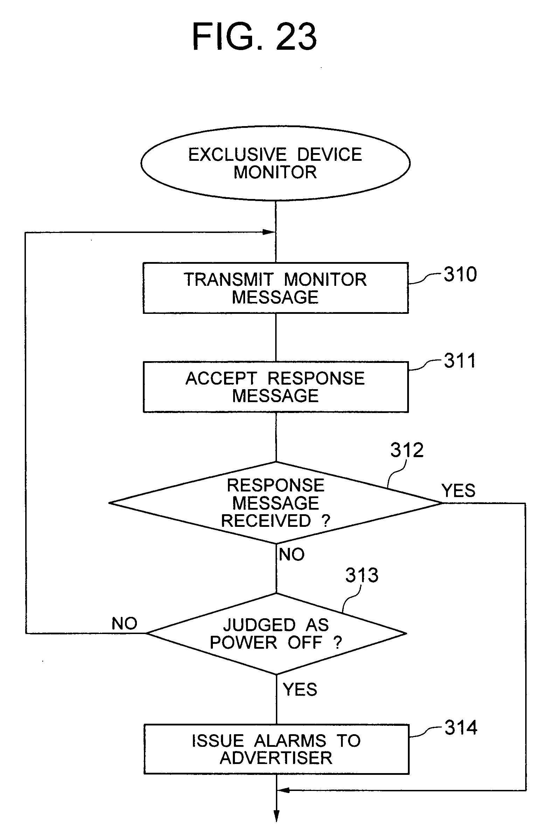

Fig. 23 is a flowchart for explaining the operation of the server computer 101 when confirming whether or not the exclusive device installed at each shop is operating. The server computer 101 always monitors the exclusive device installed at each shop in its business hours to know whether or not the exclusive device is powered ON. With respect to each exclusive device, the controller 120 performs the following operations at intervals of a constant time in accordance with the main program 124. The controller first transmits a monitor message saying confirmation of whether or not power of the exclusive device is turned ON to the exclusive device via the network 100 (step 310) and accepts its response message therefrom for a fixed period of time (step 311). When receiving the response message from the exclusive device within the fixed period of time, the controller determines that the exclusive device is operating (step 312). When failing to receive the response message from the exclusive device, the controller repeats the operations of the steps 310 to 312 by a predetermined number of times, during which when still failing to receive the response message even once, the controller determines that the exclusive device is not operating (step 313) and issues an alarm to the advertiser, e.g., through a telephone line to prompt him to operate the exclusive device (step 314).

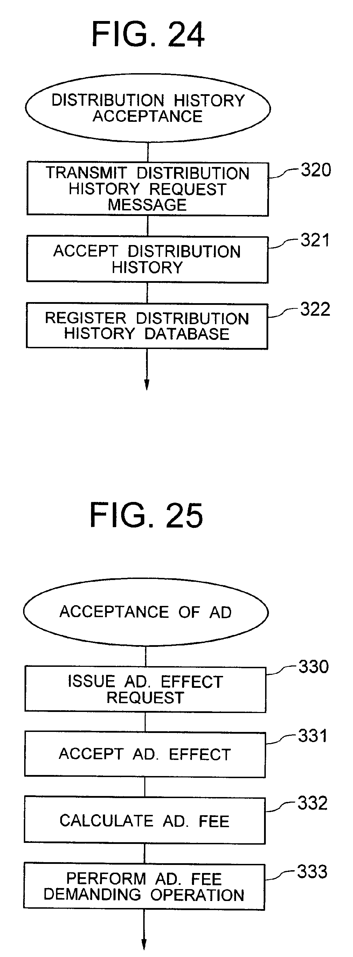

Fig. 24 is a flowchart for explaining the operation of the server computer 101 when receiving a report about an advertisement information distribution history from a base station. The controller 120 performs the following operations under control of the main program 124. The controller first transmits an operational message to demand the distribution history of the advertisement information from the base station for distribution of the advertisement information at intervals of a fixed period of time (e.g., one month) determined by the advertisement company or determined between the advertisement company and advertiser (step 320), and also receives the distribution history from the base station (step 321). When receiving the distribution history via the network 100, the controller registers it in the distribution history database 127 (step 322). After transmitting a distribution history request message in the step 320, if failing to receive the same file from the base station, the controller repeats the operations of the step 320 and subsequent steps.

Fig. 25 shows a flowchart for explaining the operation of the server computer 101 when receiving a report about advertisement effects from the exclusive device installed at the shop. The controller 120 performs the following operations under control of the main program 124. The controller first transmits an operational message to the exclusive device via the network 100 to demand the advertisement effects from the exclusive device at intervals of a predetermined period of time (e.g., one month) determined by the advertisement company or determined between the advertisement company and advertiser (step 330), and also receives the advertisement effects from the exclusive device (step 331). When receiving the advertisement effects via the network 100, the controller calculates an advertisement fee for the corresponding advertisement information in accordance with an advertisement fee calculation method determined between the advertiser and advertisement company (step 332). When another charging method is used together with the charging method based on the advertisement effects, it is required for the controller to previously receive information necessary to use the charging method. The controller finally performs operation (e.g., printing of an advertisement fee invoice) necessary for the advertisement company to demand the advertisement fee of the advertiser (step 333). After transmitting the advertisement effect request message in the step 330, when failing to receive the advertisement effects from the exclusive device within a fixed period of time, the controller repeats the operations of the step 330 and subsequent steps.

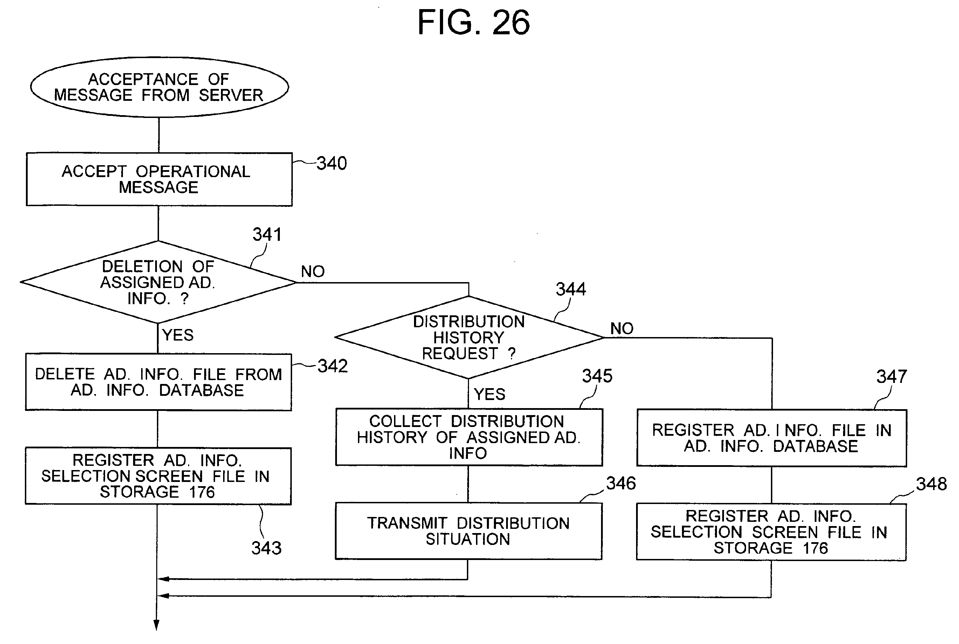

Explanation will then be made as to the operation of the base station 103. Fig. 26 shows a flowchart for explaining the operation of the base station 103 when receiving an operational message relating to the advertisement information from the server computer 101. When the server computer 101 is connected to the base station 103 via the network 100, the controller 170 performs the following operations under control of the main program stored in the storage 173. The base station first receives an operational message from the server computer 101 (step 340). Its operational contents is any one of deletion of the advertisement information, new addition of advertisement information, modification of the advertisement information, and distribution history request. When the operational contents is the distribution history request, only the advertisement information ID is stored in the field 260 of the operational message. When receiving the operational message, the controller 170 examines whether or not the operational contents is the advertisement information deletion (step 341). When the operational contents is the advertisement information deletion, the base station deletes an advertisement information file associated with the advertisement information ID stored in the field 261 from the advertisement information database 174 (step 342), and registers the advertisement information selection screen file stored in the field 261 into the storage 176. Otherwise, the base station examines whether or not the operational contents is a request of the advertisement information distribution history (step 344). When the operational contents is the distribution history request, the base station collects distribution history information of a date of the previous distribution history report and later from the distribution history database 175 with respect to the advertisement information ID stored in the field 261 (step 345), and collectively transmits the collected information to the server computer 101 (step 346). When the operational contents is not the distribution history request in the step 344, it means the advertisement information modification or new addition and thus the base station registers the advertisement information file stored in the field 261 and the advertisement information selection screen file in the advertisement information database 174 and storage 176 respectively (steps 347 and 348).

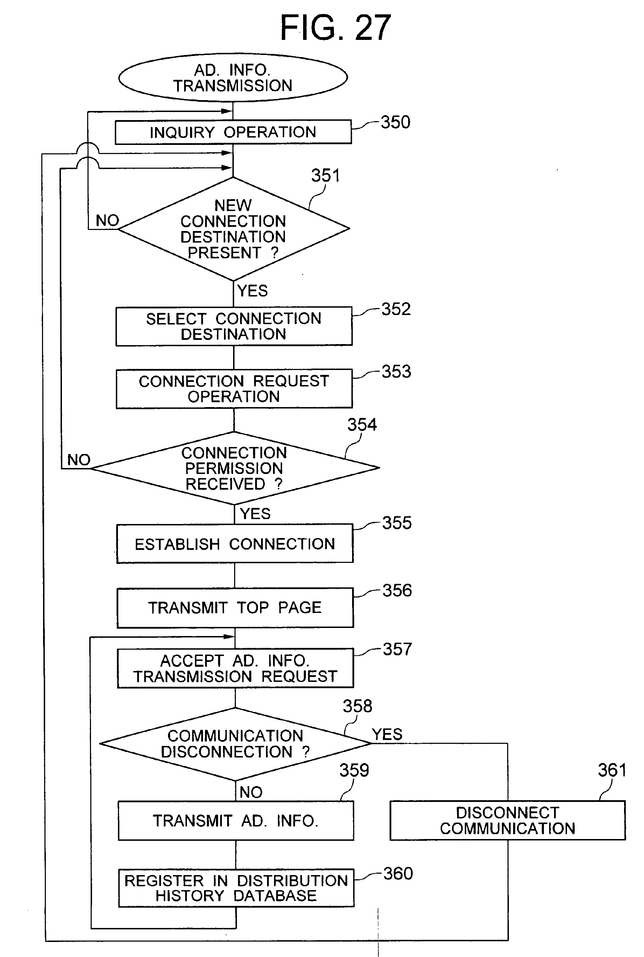

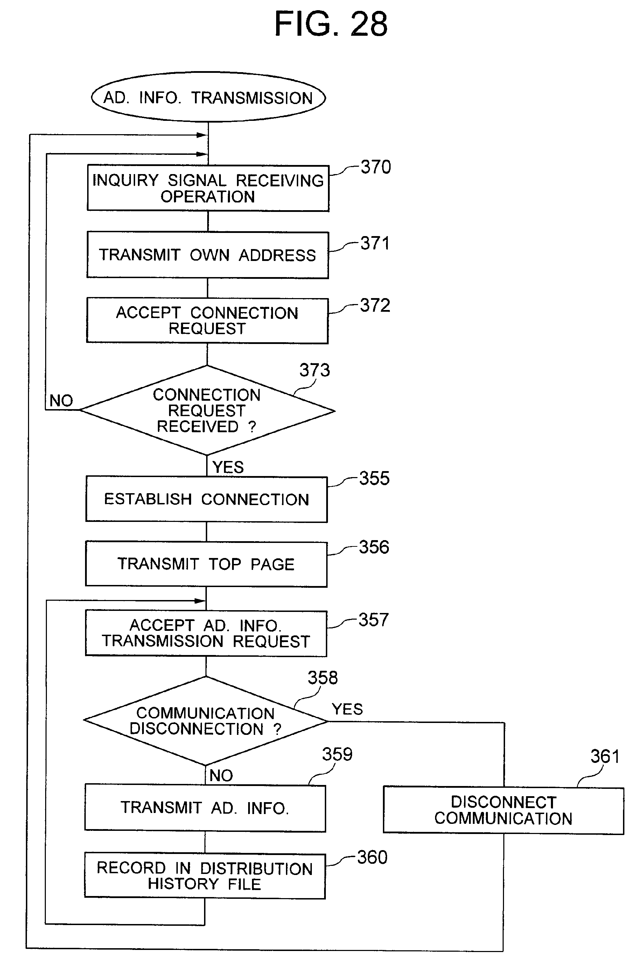

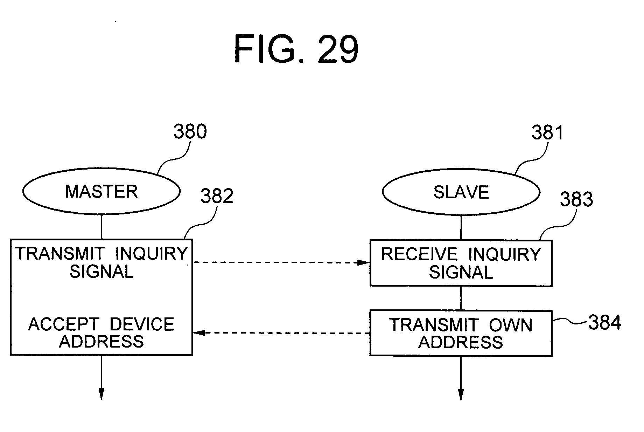

Figs. 28 and 29 are flowcharts for explaining the operation of the base station 103 when transmitting advertisement information from a portable communication terminal. The base station and portable communication terminal have both a means for finding a portable communication terminal and base station present in their own radio data communicatable ranges of the station and terminal, as already explained in the detailed structures of the base station and terminal. Explanation will first be made as to the operation for realization of the finding means. In the following explanation, the above finding operation will be referred to as the inquiry, an inquiry side will be referred to as the master, and the found side will be referred to as the slave, hereinafter. The base station and portable communication terminal can both be operated as the master or slave. Fig. 29 shows a flowchart for explaining the operations of a master 380 and slave 381 in the inquiry operation. In the inquiry operation, the master 380 first transmits an inquiry signal into the radio data communicatable range around its own station for a fixed time, and at the same time, receives the device address of the slave present within its own station range (step 382). The slave 381, which is always ready to receive the inquiry signal, when receiving the inquiry signal, transmits to the master 380 the device address allocated to the radio section of the slave 381 (step 384). In this connection, the slave 381 can suppress its power consumption by ignoring the inquiry signal. Finally, the master 380, which received the device address of the slave 381, regards it as having found the slave 381. Fig. 27 shows a flowchart for explaining the basic operation of the base station 103. The controller 170 performs the following operations under control of the main program 173. The base station 103 periodically performs the inquiry operation as a master (step 350). When there are a plurality of portable communication terminals within the radio data communicatable range, the base station receives all the device addresses from their terminals. Next the base station 103 examines whether or not to have found the portable communication terminals in the step 350 (step 351). When having found them, the base station 103 selects, e.g., any one or ones of the found terminals as a connection destination or destinations (step 352), issues a connection request to the selected portable communication terminal or terminals, and waits for its response (step 353). Contents of the response from the portable communication terminal or terminals is a connection permission or rejection. The base station also has no response. Thus, the base station examines whether or not to have received the communication permission from the selected portable communication terminal or terminals (step 354). When receiving the connection permission, the base station establishes connection with the associated portable communication terminal or terminals (step 355). When receiving the connection rejection or no response, on the other hand, the base station returns to the step 351 to select one of the portable communication terminals found in the step 350 and not selected yet as the connection destination, and repeats the operations of the step 353 and subsequent steps. When establishing connection with the portable communication terminal, the base station transmits such a top page as shown in Fig. 35 among the advertisement information selection screen files (step 356) to prompt the user to select the category of the advertisement information. When selecting the category from the display, the base station transmits a list of pages of the advertisement information belonging to the selected category as shown in Fig. 36. When the user selects the advertisement information and the base station receives a corresponding advertisement information transmission request from the portable communication terminal (step 357), the base station transmits the shop information to the terminal (step 359). When maintaining and managing the distribution history database 175, the base station also registers its advertisement information ID and distribution date in the distribution history database 175 (step 360). The base station repeats the operations of the steps 357 to 360 until the base station receives a communication disconnection request from the portable communication terminal. The base station also receives the communication disconnection request in the step 357 and examines whether or not to have received the request in the step 358. When receiving the communication disconnection request, the base station performs the communication disconnecting operation (step 361). The step 361 is also carried out even when the base station came not to be able to establish the radio communication as when the portable communication terminal so far connected thereto moved out of the communicatable range of the base station.

Fig. 28 shows a flowchart for explaining the operation of the base station 103 when receiving the inquiry signal from the portable communication terminal. In the drawing, parts having the same functions as those in Fig. 27 are denoted by the same reference numerals as in Fig. 27. The base station 103 periodically performs the inquiry operation as mentioned above, and also always receives the inquiry signal from the portable communication terminal (step 370). When the base station receives the inquiry signal from the portable communication terminal, the controller 170 performs the following operations under control of the main program 173. First, the controller returns a device address allocated to the radio section 172 (step 371), and also accepts a connection request from the portable communication terminal (step 372)s. In the step 373, the controller examines whether or not the base station received the connection request. When the database received the connection request, the base station performs the operations of the step 355 and subsequent steps. Since the portable communication terminal is considered to already know the device address of the base station by the previously inquiry, the base station 103 also always accepts the connection request. Therefore, when the base station 103 received the connection request directly from the portable communication terminal, the base station performs the operations of the step 355 and subsequent steps.

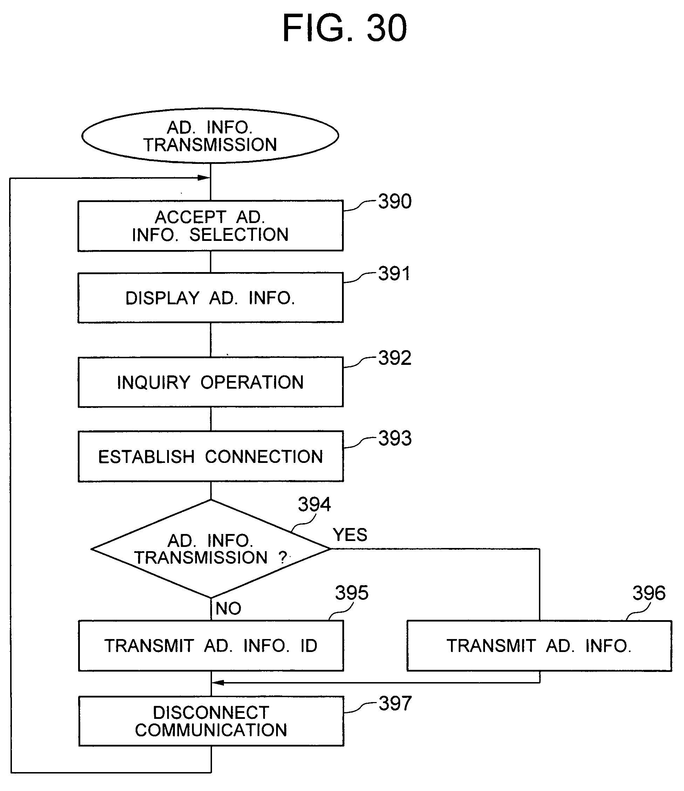

Fig. 30 shows a flowchart for explaining the operation of the base station 103 when the base station 103 has the display section 178 and input section 179 as shown in Fig. 11 and when a user selects and looks at advertisement information utilizing the display and input sections. The base station 103 accepts selection of advertisement information through the input section 179 (step 390). In the step 390, the base station displays information similar to that shown in Fig. 35 or 36 on the display section 178, which prompts the user to select the advertisement information. When the user selects the advertisement information, the information is displayed on the display section 178 (step 391). Next, in order that the exclusive device installed at a shop associated with the advertisement information can confirm the number of users who looked at the advertisement information and correspondingly visited the shop, the base station 103 transmits the advertisement information ID or advertisement information itself to the portable communication terminal possessed by the user. In order that the exclusive device can ensure the above confirmation, the advertisement company 111 accepts the advertisement information distribution request from the advertiser on condition that the user who received the advertisement information or advertisement information ID at his portable communication terminal can get a discount service, and the above conditions of the discount service can be beforehand informed to the user by displaying it, e.g., on the display section 178. With it, the portable communication terminal can be set so that the user does not ignore the inquiry signal from the base station and it prompts the user to establish a connection with the base station. After the step 391, the base station 103 examines the device address of the portable communication terminal by performing the inquiry operation (step 392), and establishes the connection with the portable communication terminal (step 393). Next, when the user wishes to look at the advertisement information at his portable communication terminal, the display section 178 prompts the user to select reception or non-reception of the advertisement information at the portable communication terminal (step 394). When the user selects the reception of the advertisement information, the base station 103 transmits the advertisement information (step 396). When the user wishes not to transmit the advertisement information, the base station transmits only the advertisement information ID (step 395). Finally, the base station performs the communication disconnecting operation (step 397). In this connection, the portable communication terminal which received the advertisement information or advertisement information ID, registers the advertisement information ID included in the advertisement information in the reception history database together with its reception date.

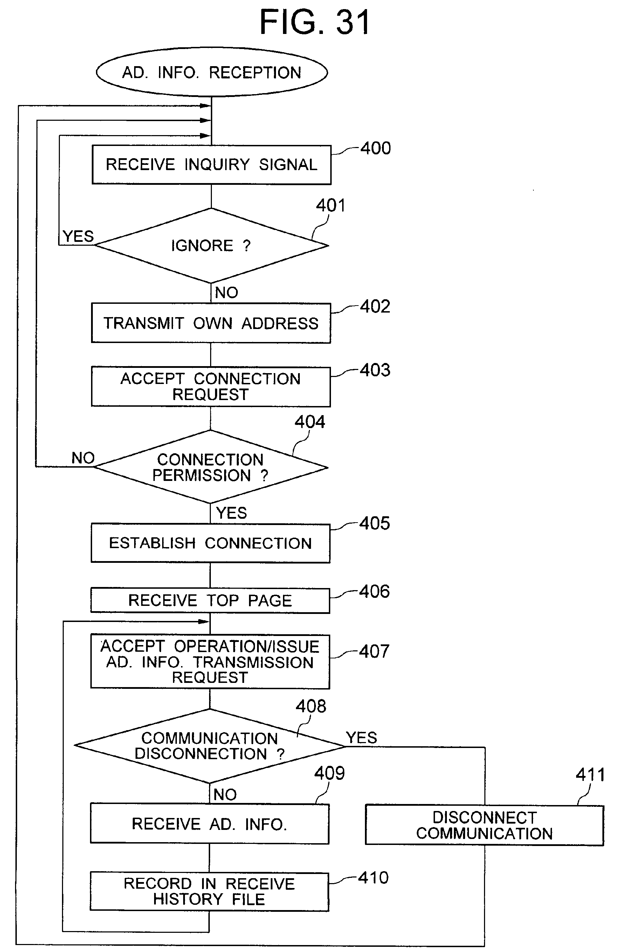

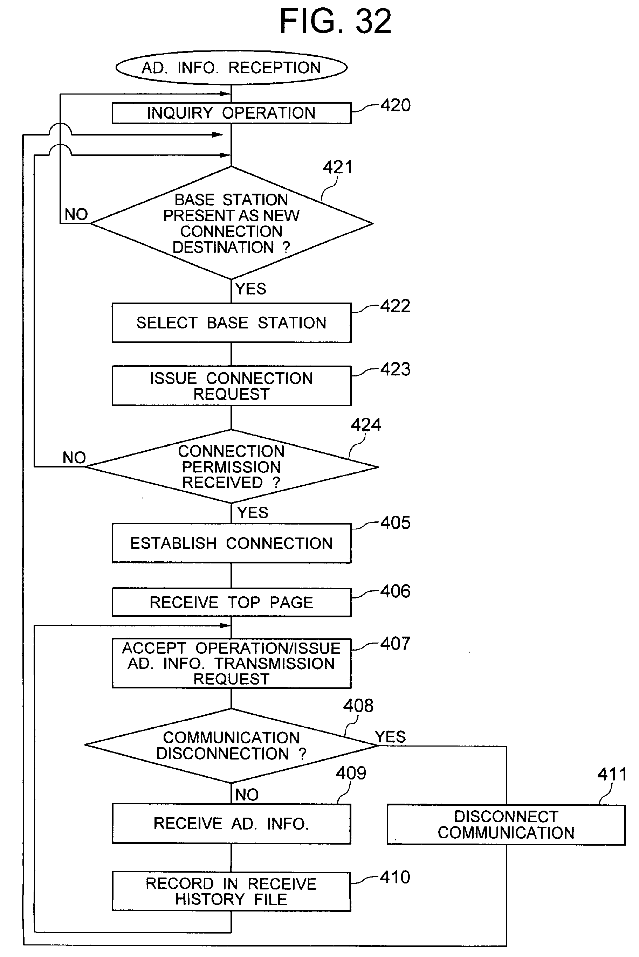

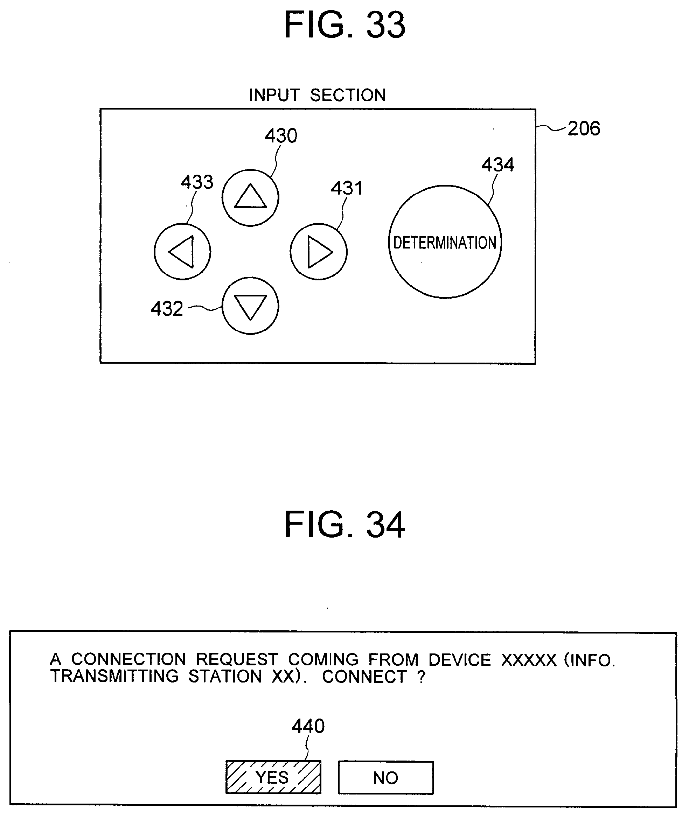

Explanation will next be made as to the operation of the portable communication terminal 104. Figs. 31 and 32 show flowcharts for explaining the operation of the portable communication terminal 104 when receiving advertisement information from the base station. Fig. 31 shows a flowchart for explaining the operation of the portable communication terminal 104 when receiving an inquiry signal from the base station. The portable communication terminal basically always accepts the inquiry signal (step 400). When the terminal 104 receives the inquiry signal, the controller 200 performs the following operations under control of the main program 202. As mentioned above, in order to suppress the power consumption of the portable communication terminal, the user can set his portable communication terminal in such a manner that the terminal ignores the inquiry signal from the base station. Thus the communication terminal examines whether or not to ignore the received inquiry signal (step 401). When not ignoring the inquiry signal, the communication terminal returns a device address allocated to the radio section 201 to the database (step 402), and also accepts a connection request (step 403). When receiving the connection request, the communication terminal displays such a message as shown, e.g., in Fig. 34 on the display section 205 to thereby prompt the user to confirm the connection or non-connection thereof (step 404). When the user allows the connection, the communication terminal transmits a connection permission to the base station and also performs a connection establishing operation therewith (step 405). After the communication terminal establishes the connection with the base station, the terminal displays the information received from the base station on the display section 145. When first receiving a top page among advertisement information selection information (step 406), the communication terminal displays it on the display section 205. When the user selects a category through the input section 206, the communication terminal transmits to the base station a message to demand a list of pages of the advertisement information belonging to the selected category. When receiving the demanded list of the advertisement information, the communication terminal displays it on the display section 205. When the user selects the advertisement information through the input section 206, the communication terminal transmits to the base station a message to demand corresponding advertisement information (step 407). The communication terminal receives the demanded advertisement information and displays it on the display section 205 (step 409), and simultaneously the communication terminal advertisement information ID included in the received advertisement information in the reception history database 204 together with its received date (step 410). The communication terminal repeats the operations of the steps 407 to 410 until the user issues a communication disconnection request through the input section 206. The communication terminal also accepts the communication disconnection request from the user in the step 407, and examines whether or not the user issued the request in the step 408. When the user issues the communication disconnection request, the communication terminal perform the communication disconnecting operation (step 411). Fig. 32 shows a flowchart for explaining the operation of the portable communication terminal 104 when performing an inquiry operation. In the drawing, parts having the same functions as those in Fig. 31 are denoted by the same reference numerals as those in Fig. 31. When the user issues an inquiry request to his portable communication terminal through the input section 206 in order to obtain advertisement information, the controller 200 performs the following operations under control of the main program 202. The controller first performs the inquiry operation in response to the above request. When base stations are present within the radio data communicatable range of the portable communication terminal, the communication terminal receives the device addresses of the base stations therefrom (step 420). The communication terminal next examines whether or not to have found the base stations in the step 420 (step 421). When the communication terminal found the base stations, the user selects one of the stations as its connection destination through the input section 146 (step 422). This causes the communication terminal to issue a connection request to the selected base station and to wait for its response (step 423). The communication terminal examines whether or not to have received a connection permission form the selected base station (step 424). When receiving the connection permission, the communication terminal performs a connection establishing operation with the base station (step 405). When receiving a connection rejection or no response, the communication terminal returns to the step 421 to examine presence or absence of one of the base stations found in the step 420 and not selected as a connection destination yet. In the case of the presence, the communication terminal prompts the user to select it as the connection destination. When establishing a connection with the selected base station, the communication terminal performs the operations of the step 406 and subsequent steps.

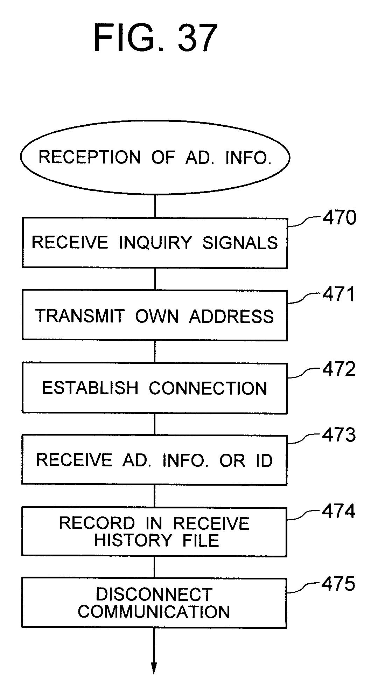

Fig. 34 shows an example of information displayed on the display section 205 in the step 404, for user's confirmation of whether to connect the portable communication terminal with the base station when the terminal receives a connection request from the base station. The user conducts various types of operations through the input section 206. It is assumed in the following explanation that the input section 206 has upper, lower, left and right keys 430 to 433 and a determination key 434 as shown, e.g., in Fig. 33. Fig. 34 shows a highlighted state of a button 440 when the button is highlighted by the user using the upper, lower, left and right keys 430 to 433. Under this condition, a push of the determination key 434 causes the controller 200 to transmit a connection permission to the base station. Fig. 35 is an example of information displayed on the display section 205 in the step 406, showing a top page received from the base station. The same drawing shows a highlighted state of a text 450 when the user highlights the text with use of the upper, lower, left and right keys 430 to 433. Under this condition, a push of the determination key 434 causes the controller 200 to transmit to the base station a message to demand a list of pages of the advertisement information belonging to the corresponding category. Fig. 36 is an example of information displayed on the display section 205, showing a list of pages of the advertisement information. In the same drawing, when the user highlights a text 460 and pushes the determination key 434, this causes the controller 200 to transmit to the base station to demand a corresponding detailed version of advertisement information. In this connection, when many advertisement information cases belong to a single category, the advertisement information list is made up of a plurality of pages as shown, e.g., in Fig. 36. In such a case, when the user highlights a text 461 and pushes the determination key 434, this causes the controller to transmit to the base station a message to demand a list of pages corresponding to next five advertisement information cases. It is possible to set the advertisement-fee basic charge in such a manner that a younger page in the pages of the advertisement information has a higher basic charge. In Figs. 35 and 36, finally, when the user highlights the button 451 and pushes the determination key 434, this causes the controller 200 to perform the communication disconnecting operation of the step 411 with the base station. Fig. 37 is a flowchart for explaining the operation of the portable communication terminal 104, when the base station 103 has the display section 178 and input section 179 as shown in Fig. 11 and when the user selects and looks at advertisement information using the display and input sections. When the user selects the advertisement information and the information is displayed on the display section 178 of the base station 103, this causes the base station to transmit an inquiry signal. When receiving the inquiry signal, the communication terminal returns a device address assigned to the radio section 201 (step 470), and also performs a communication connection establishing operation with the base station (step 472). When receiving the advertisement information or advertisement information ID from the base station (step 473), the communication terminal registers the advertisement information ID in the reception history database 204 together with its received date (step 474). Finally the communication terminal performs the communication disconnecting operation (step 475).

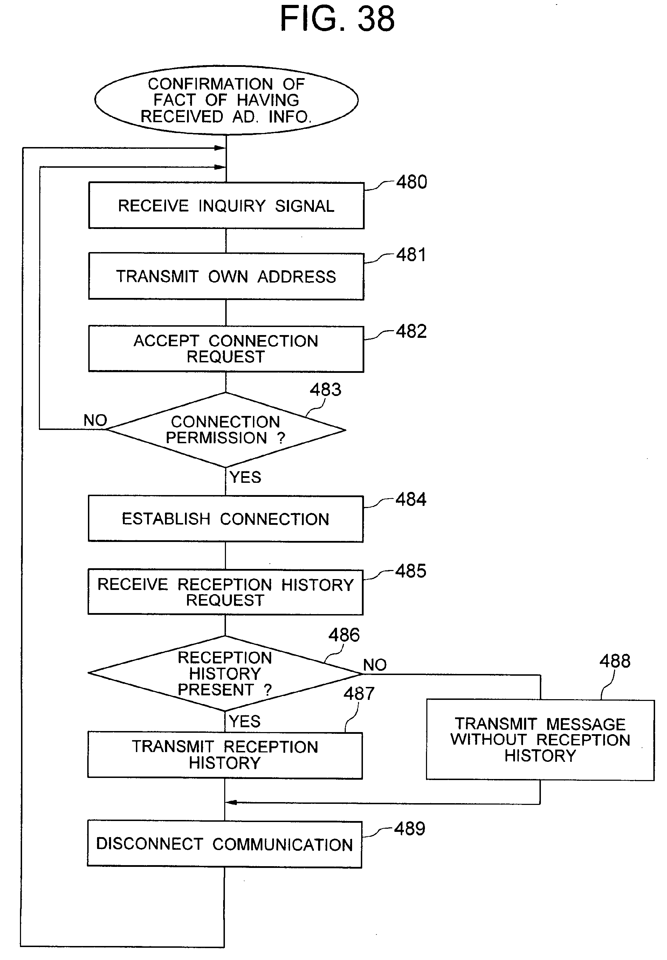

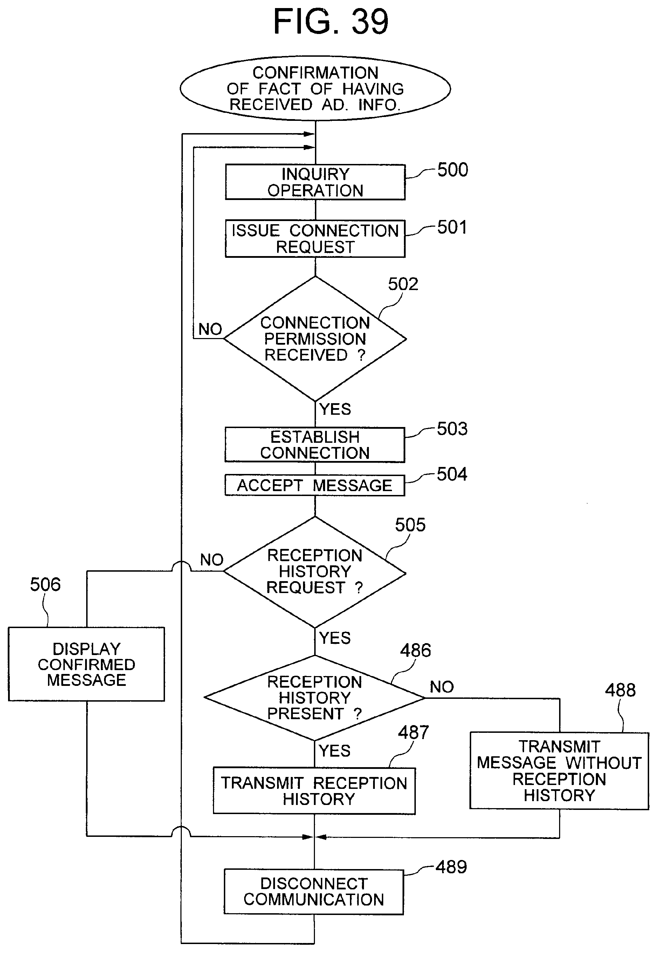

Figs. 38 and 39 shows flowcharts for explaining the operation of the portable communication terminal 104 when an exclusive device installed at a shop confirms the fact that the portable communication terminal 104 received advertisement information associated with the shop. In order to enable ensured confirmation of the exclusive device of the above fact, it is possible that the advertisement company 111 accepts an advertisement information distribution request from an advertiser on condition that the user who was confirmed by the exclusive device can get a discount service and also that the above condition of user's discount service can be beforehand informed to the user. With it, the portable communication terminal can be set so as not to ignore an inquiry signal from the exclusive device and to prompt its user to permit a connection with the exclusive device in response to a connection request therefrom. Fig. 38 shows a flowchart for explaining the operation of the portable communication terminal 104 when receiving the inquiry signal from the exclusive device. It is assumed in the following description that the portable communication terminal 104 is present within the radio communicatable range of the exclusive device, and that the user does not ignore the inquiry signal and issues a connection permission with the exclusive device in response to a connection request therefrom. When receiving the inquiry signal (step 480), the controller 200 performs the following operations under control of the main program 202. The controller first returns a device address assigned to the radio section 201 to the exclusive device (step 481), and also accepts the connection request therefrom (step 482). In order for the exclusive device to avoid double confirmation of the same user, when the portable communication terminal 104 is once confirmed by the exclusive device within a predetermined time (e.g., 12 hours), the exclusive device is set so as not to issue the connection request thereto. When the communication terminal receives the connection request, the user of the communication terminal confirms whether or not to issue the connection permission (step 483). As soon as the user issues the connection permission, the communication terminal performs a connection establishing operation with the exclusive device (step 484). After establishing the connection, when the communication terminal receives an advertisement-information reception request message from the exclusive device (step 485), the terminal searches the reception history database 204 for a corresponding reception history on the basis of the advertisement information ID included in the received message to thereby examine presence or absence of the reception history (step 486). When the reception history is present, the communication terminal transmits it to the exclusive device (step 487). When the reception history is absent, on the other hand, the communication terminal transmits a message indicative of the absence to the exclusive device (step 488). Finally the communication terminal performs its communication disconnecting operation with the exclusive device (step 489). In order for the user to get the above discount service, such a situation is considered that he positively inquires it with use of his portable communication terminal 104 and gets from the exclusive device the confirmation of the fact of reception of the advertisement information from the base station.

Fig. 39 shows a flowchart for explaining the operation of the portable communication terminal 104 in such a situation as to have mentioned above. In the drawing, parts having the same operations as those in Fig. 38 are denoted by the same reference numerals as those in Fig. 38. When the user issues an inquiry request to the portable communication terminal 104 from the input section 206, the controller 200 performs the following operations under control of the main program 202. The controller first performs its inquiry operation and receives a device address from the exclusive device (step 500). The communication terminal then issues a connection request to the found exclusive device and also waits for its response (step 501). And the communication terminal examines whether or not to have received a connection permission from the exclusive device (step 502). When receiving the connection permission, the communication terminal performs a connection establishing operation with the exclusive device (step 503). After establishing the connection, the communication terminal accepts a message from the exclusive device (step 504). When receiving the message, the communication terminal examines whether or not the contents of the received message is an advertisement-information reception history request (step 505). When the message is not the reception history request, the communication terminal displays information indicating that the terminal is already confirmed by the exclusive device on its display section (step 506). When the message means the advertisement information reception request, on the other hand, the communication terminal performs the operations of the step 486 and subsequent steps.

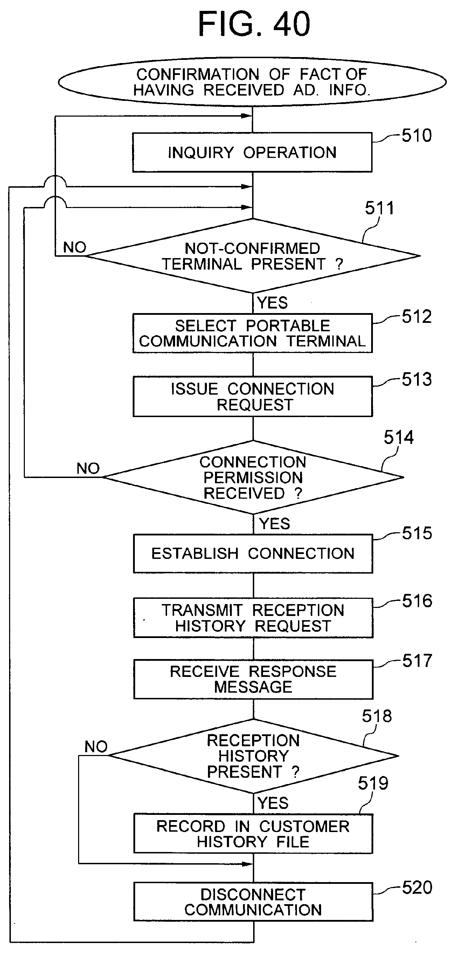

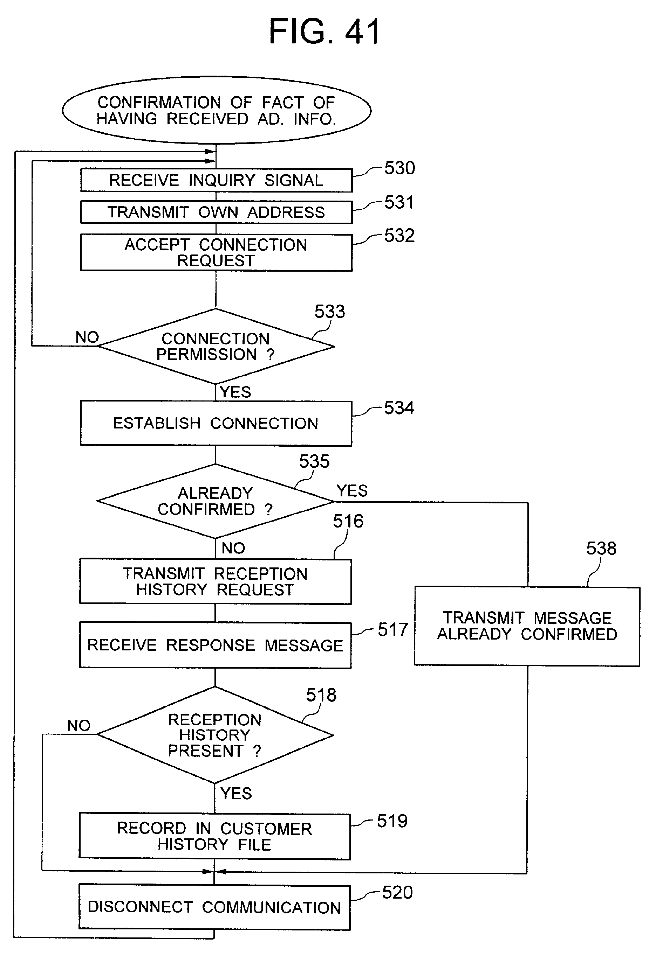

Explanation will next be made as to the operation of the exclusive device 106. Figs. 40 and 41 show flowcharts for explaining the operation of the exclusive device 106 installed at a shop when confirming the fact that the portable communication terminal received advertisement information associated with the shop. Fig. 40 shows a flowchart for explaining the basic operation of the exclusive device 106. The controller 220 performs the following operations under control of a main program 223 during business hours of the shop at which the exclusive device 106 is installed. The exclusive device 106 periodically performs inquiry operation (step 510). When a plurality of portable communication terminals are present within the radio data communicatable range of the exclusive device 106, the exclusive device receives the device addresses of all the terminals. The exclusive device then examines whether or not to have found the portable communication terminals in the step 510 (step 511). When finding the terminals, the exclusive device selects, e.g., one or ones of the found terminals as its connection destination or destinations (step 512), issues a connection request to the selected terminal or terminals, and also waits for its response (step 513). In order for the exclusive device to avoid double confirmation of an identical user, when the exclusive device received the same device address as that registered in the customer history database 224 within a time period determined by the advertisement company 111, the exclusive device is set so as not to select the corresponding communication terminal as its connection destination in the step 512. And the exclusive device examines whether or not to have received a connection permission from the selected portable communication terminal (step 514). When receiving the connection permission, the exclusive device performs a connection establishing operation with the associated portable communication terminal (step 515). When receiving a connection rejection or no response, on the other hand, the exclusive device returns to the step 511 to select new one of the found terminals (step 512) and repeat the operations of the step 513 and subsequent steps. After establishing the connection with the portable communication terminal, the exclusive device transmits a message indicative of an received advertisement information history to the terminal together with the corresponding advertisement information ID (step 516). When receiving a response message from the portable communication terminal (step 517), the exclusive device examines whether or not the contents of the message is an received advertisement information history (step 518). In the case of the reception history, the exclusive device registers it in the customer history database 224 (step 519). When the contents of the response message is not the reception history, the exclusive device performs its communication disconnecting operation (step 520). Fig. 41 shows a flowchart for explaining the operation of the exclusive device 106 when receiving an inquiry signal from a portable communication terminal. In the drawing, parts having the same functions as those in Fig. 40 are denoted by the same reference numerals as those in Fig. 40. The controller 220 performs the following operations under control of the main program 223. When receiving an inquiry signal (step 530), the exclusive device returns a device address assigned to the radio section 222 (step 531) and also accepts a connection request (step 532). When receiving the connection request, the exclusive device transmits a connection permission and also performs a connection establishing operation with the portable communication terminal (step 534). Next the exclusive device examines whether or not to have already confirmed the portable communication terminal within the aforementioned time (step 535). If so, the exclusive device transmits a message indicative of the effect (step 536). If not, then the exclusive device performs the operations of the step 516 and subsequent steps. In this connection, there is another method in which the exclusive device examines whether or not to have already confirmed the terminal by referring to the device address of the portable communication terminal in the step 530, and if so then the exclusive device transmits a connection rejection in the step 533.

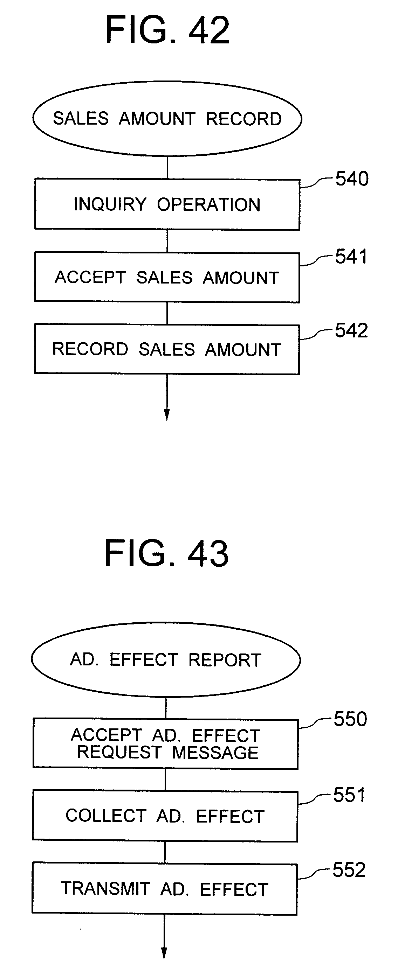

Fig. 42 shows a flowchart for explaining the operation of the exclusive device 106 when recording the amount of sales generated by a user in the customer history database 224. It is assumed in the following explanation that the exclusive device 106 already confirmed the fact that the user received advertisement information from the base station. In order to register the amount of sales in the customer history database 224, a device address for identification of the user is required. Thus, when the user pays a money for his bought goods and an employee of the shop issues an inquiry operation request through the input section 226 to the exclusive device 106, for example, the controller 220 performs the following operations under control of the main program 223. The exclusive device first performs the inquiry operation and receives a device address of the portable communication terminal possessed by the user (step 540). The exclusive device 106 prompts the operator of the exclusive device 106 to enter the amount of sales through the display section 225 and accepts the sales amount from the input section 226 (step 541). The exclusive device finally registers the entered sales amount in the customer history database 224 in the step 540 (step 542). Through the above operations, the exclusive device 106 can also have a so-called cache register function by providing a calculation function to the exclusive device.

Fig. 43 shows a flowchart for explaining the operation of the exclusive device 106 when reporting advertisement effects to the server computer 101. When the server computer 101 is connected to the exclusive device 106 via the network 100, the controller 220 performs the following operations under the main program 223. When receiving an advertisement effect request message from the server computer 101 (step 550), the exclusive device collects customer histories after the data on which advertisement effects was previously reported from the customer history database 224 (step 551), and transmits the collected histories to the server computer 101 (step 552).

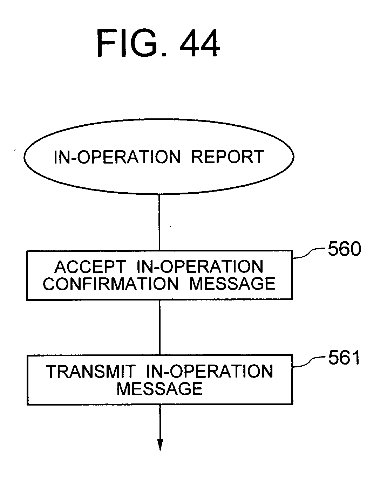

Fig. 44 shows a flowchart for explaining the operation of the exclusive device 106 when receiving a message for confirmation of whether or not the exclusive device is powered ON from the server computer 101. It is assumed in the following explanation that the exclusive device 106 is operating. When the exclusive device 106 is not operating, the exclusive device do nothing. The controller 220 performs the following operations under control of the main program 223. When receiving the above message from the server computer 101 (step 560), the exclusive device transmits a response message indicative of 'in-operation' to the server computer 101 (step 561).

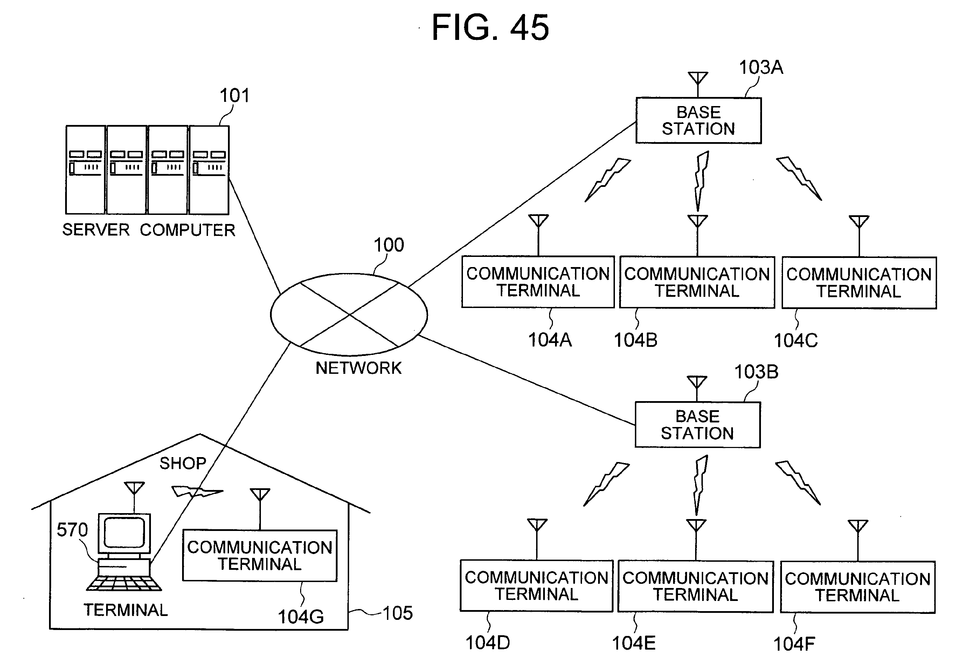

Fig. 45 is a configuration of the entire communication system when the terminal 102 in Fig. 1 also has the function of the exclusive device 106. In the drawing, parts having the same functions as those in Fig. 1 are denoted by the same reference numerals as those in Fig. 1. A terminal 570 in Fig. 45 has such parts 220 to 226 as shown in Fig. 14. In this case, in place of lending an exclusive device to an advertiser, the advertisement company accepts an advertisement distribution request on condition that the shop should install in the terminal 570 the main program 223 for implementation of the operation of the exclusive device as shown in Figs. 40 to 44.

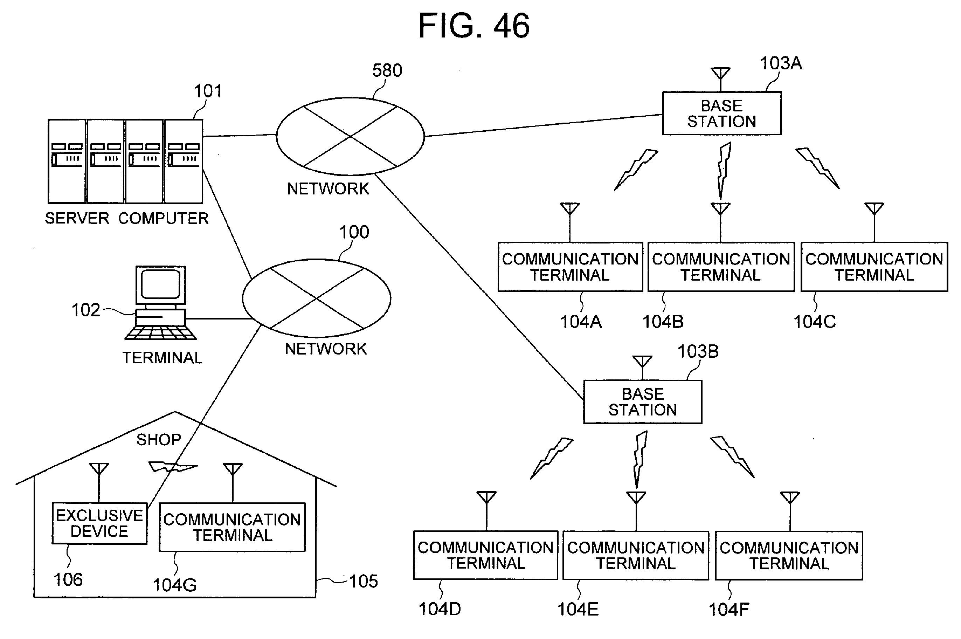

Fig. 46 is a configuration of the entire communication system when the server computer 101 and respective base stations are connected to a private or dedicated network 580. Message exchange between the server computer 101 and respective base stations is carried out via the network 580.

A second embodiment of the present invention will next be explained.

In the first embodiment, explanation has been made in connection with the fixed basic charge of the advertisement fee included in the advertisement fee as a part as an example of the advertisement-rate calculation method for the advertisement company to charge the advertiser. In the second embodiment, explanation will be made as to the configuration of the communication system and the operations of the respective constituent elements thereof, when a method for setting the basic charge of the advertisement fee not at a fixed value but according to the total number of users present in the vicinity of a base station is applied to the system. Since the advertisement fee basic charge is set based on the aforementioned method, different advertisement effects of the base stations depending on their different installation place circumstances can reflect on the advertisement fee. The configuration of the entire communication system is similar to that of Fig. 1, 45 or 46. Further, the summary of mutual operations between the advertiser 110, advertisement company 111, base station 103 and user 112 after the advertiser asks the advertisement company an advertisement distribution request procedure until the advertisement company charges the advertiser as the advertisement fee, is similar to that of Fig. 2. However, when the base station 103 reports the distribution condition of the advertisement information to the advertisement company 111, the aforementioned total user number is also included in its report. The following is different from the first embodiment; that is, the detailed structure of the base station 103, the operation of the server computer 101 and the operation of the base station 103; which will be explained below respectively.

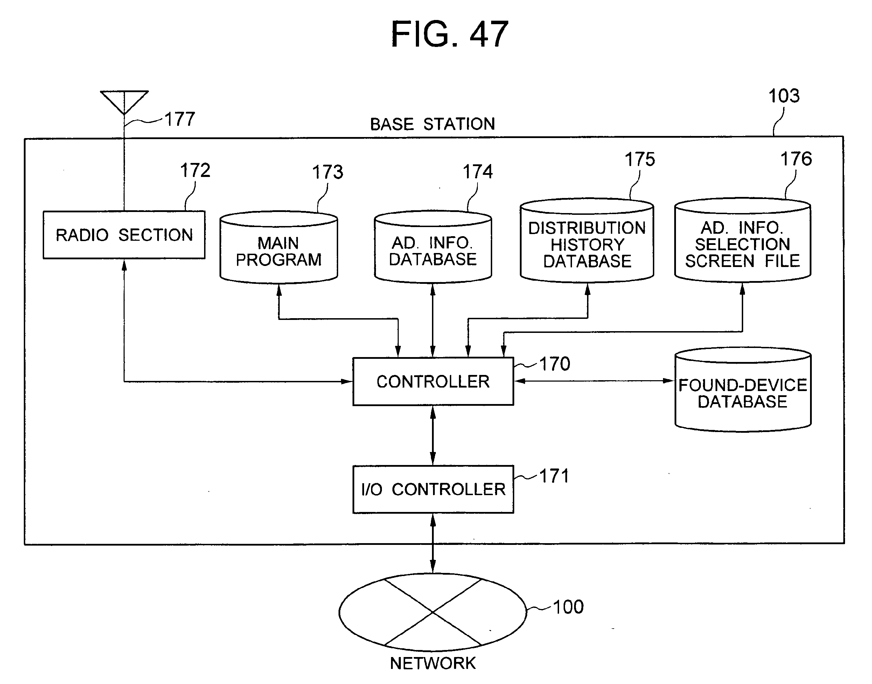

Fig. 47 shows a detailed structure of the base station 103. In the drawing, parts having the same functions as those in Fig. 14 are denoted by the same reference numerals as those in Fig. 14. In this connection, the base station may have such display and input sections as shown in Fig. 11 and be operated as in the first embodiment. A storage 590 as a part different from Fig. 14 will be explained in the following. Stores in the storage 590 are found device files. The found device file describes portable communication terminals present in the vicinity of the base station 103, and includes device addresses assigned to the radio sections of the portable communication terminals found by the base station 103 and the found date.

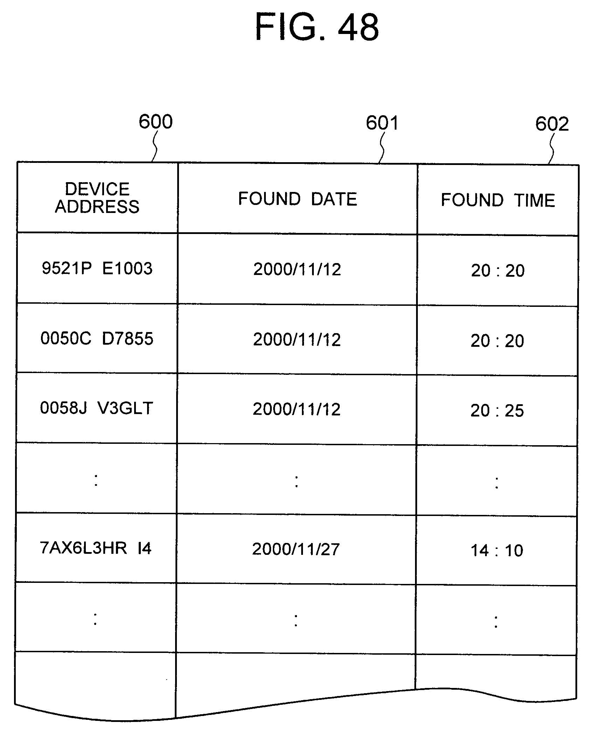

Fig. 48 shows an example of a database as a collection of the found device files stored in the storage 590. In the drawing, reference numeral 600 denotes device addresses assigned to the radio sections of the found portable communication terminals, numeral 601 denotes a date on which the portable communication terminals were found, and 602 denotes a time at which the terminals were found. For example, the portable communication terminal having a device address of "9521PE1003" assigned thereto indicates to be found at "20 (hour):20(minute)" on "November 12, 2000".

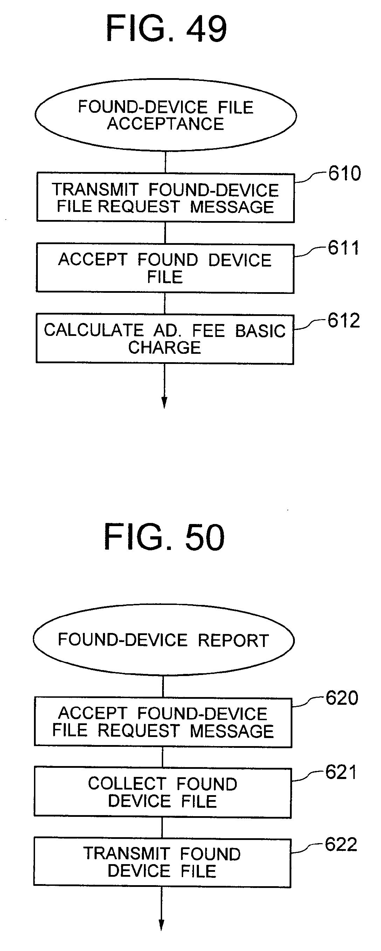

Explanation will next be made as to the operation of the server computer 101. The server computer 101 performs the operations explained in the first embodiment and accepts the total number of users present in the vicinity of the base station from the base station. Fig. 49 shows a flowchart for explaining the operation of the server computer 101 when accepting the report from the base station. The controller 120 performs the following operations under control of the main program 124. The server computer, at intervals of a predetermined period of time (e.g., one month) determined by the advertisement company or determined between the advertisement company and advertiser, first transmits an operational message indicative of a request of the corresponding found device file to the base station which is distributing advertisement information via the network 100 (step 610), and also accepts the file from the base station (step 611). When accepting the file via the network 100, the server computer calculates an advertisement fee basic charge on the basis of the file (step 612). As an example of the method for calculating the advertisement fee basic charge in the step 612, it is considered to set (the number of users found within the above interval period multiplied by ¥1) as the basic charge. In this example, when the base station found a total of 5000 portable communication terminals during the above interval period, the this-time advertisement fee basic charge charged to the advertiser becomes ¥5,000. In this connection, even after transmitting a found-device file request message in the step 590, when the server computer fails to receive the file from the base station within a fixed period of time, the computer repeats the operations of the step 610 and subsequent steps. The operation of the base station 103 will then be explained. The base station 103 performs basically the same operations as those explained in the first embodiment and reports the total number of users to the server computer 101. Explanation will be made as to only parts different from those explained in the first embodiment.

To maintain and manage the found-device database 590, the base station first registers the found device address in the found-device database 590 together with its found date, immediately after the inquiry operation (step 350) in Fig. 27 and the inquiry signal receiving operation (step 370)a in Fig. 28.

Fig. 50 shows a flowchart for explaining the operation of the base station 103 when reporting the total number of users found within the aforementioned period to the server computer 101. When the server computer 101 is connected to the base station 103 via the network 100, the controller 170 performs the following operations under control of the storage 173. When receiving an operational message indicative of a demand of the found device file from the server computer 101 (step 620), the base station collects corresponding found device files after the finding date on which the previous found device file was transmitted, from the found-device database 590 (step 621), and transmits the collected found device files to the server computer 101 (step 622).

A third embodiment of the present invention will be explained.

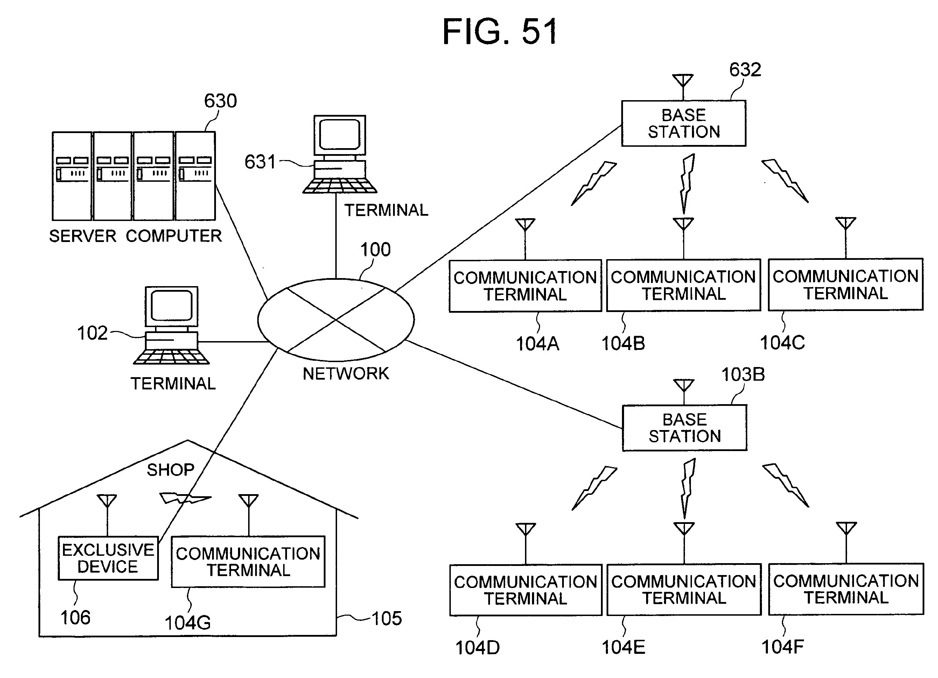

In the first embodiment, the advertisement company installs base stations at various places. In the third embodiment, meanwhile, not only the advertiser but also a fourth party "base station provider" installs base stations at various places. The base station provider offers base stations to the advertisement company, and in exchange therefor, the advertisement company pays to the base station provider a part of advertisement fees of ones of the base stations collected by the advertisement company from the advertisers which correspond to the base stations installed by the base station provider. In the following explanation, that part of the advertisement fees mentioned above to be paid from the advertisement company to the base station provider will be referred to as the "result/return fee", hereinafter. Fig. 51 shows a configuration of the entire communication system. In the drawing, parts having the same functions as those in Fig. 1 are denoted by the same reference numerals as those in Fig. 1. However, it is assumed in this case that a base station 632 was offered from the base station provider. The base station provider conducts a base station offer procedure to a server computer 630 with use of a terminal 631 via the network 100.

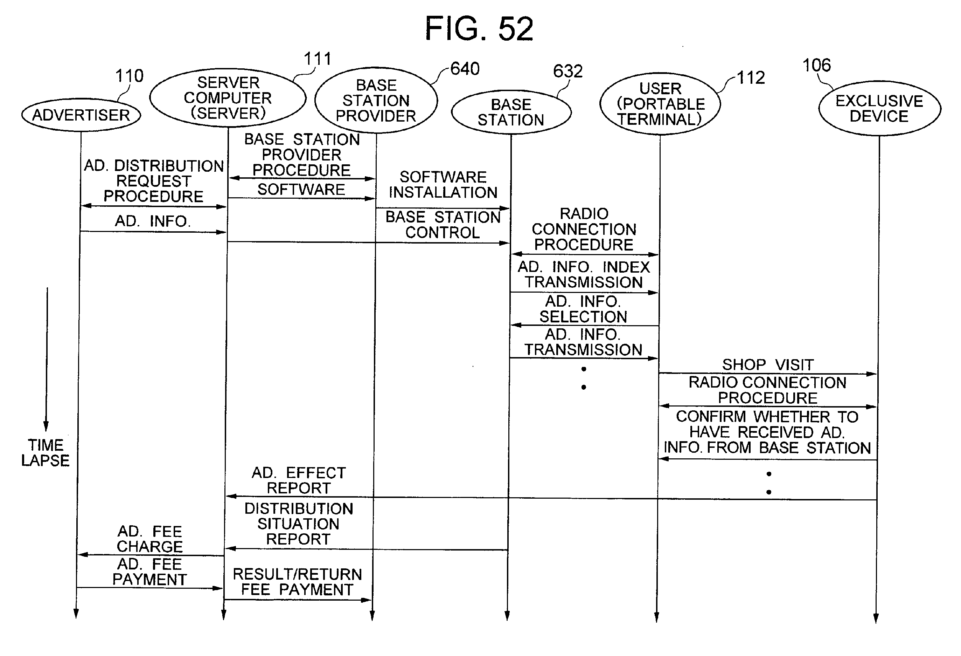

Fig. 52 shows a summary of mutual operations done between the advertiser 110, advertisement company 111, base station provider 640, base station 632 offered from the base station provider 640, user 112, and exclusive device 106, after the base station provider conducts the base station offer procedure to the advertisement company until the advertisement company pays the result/return fee to the base station provider. The base station provider 640 conducts the base station offer procedure to the advertisement company 111 through the network 100. The base station offer procedure includes approval of regulations or conditions presented by the advertisement company 111 and determination of an amount of the result/return fee to be paid to the base station provider 640. When the base station offer procedure is completed, the advertisement company 111 passes to the base station provider 640, e.g., via the network 100 a software application causing the base station to function as a base station of the advertisement company. After receiving the software, the base station provider 640 installs it in the base station 632 and operates it. The subsequent mutual operations to be done between the advertiser 110, advertisement company 111, base station 632, user 112 and exclusive device 106 after the advertiser 110 conducts the advertisement distribution request procedure to the advertisement company 111 until the advertiser pays its advertisement fee, are similar to those explained in Fig. 2. The advertisement company 111 finally pays the result/return fee determined by the above procedure to the base station provider 640.

Explanation will then be made as to the detailed structure of the server computer 630 among the constituent elements of the communication system shown in Fig. 51. The other constituent elements are similar to those in the first embodiment. It is assumed, however, that the main program of the base station 632 offered from the base station provider operates in the substantially the same manner as the main program of the base station in the first embodiment, because the software passed from the advertisement company was installed in the offered base station.

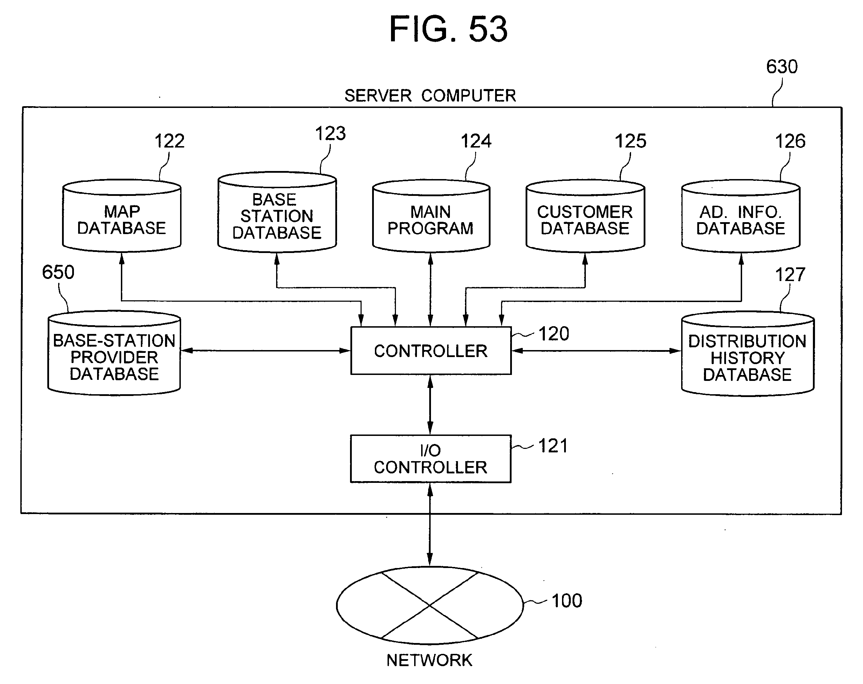

Fig. 53 is a block diagram of a detailed structure of the server computer 630 possessed by the advertisement company. In the drawing, parts having the same functions as those in Fig. 3 are denoted by the same reference numerals as those in Fig. 3. In the following, a storage 650 as a part different in Fig. 3 will be explained. Stored in the storage 650 are files about the base station providers. The base station provider file includes information unique to the base station provider such as ID and password of the base station provider, private information thereabout, and ID of the base station offered from the base station provider. Among the information, the private information of the base station provider further includes a representative name, telephone number to be contacted, Fax number, E-mail address, and data relating to bank account for transfer of the result/return fee from the advertisement company.

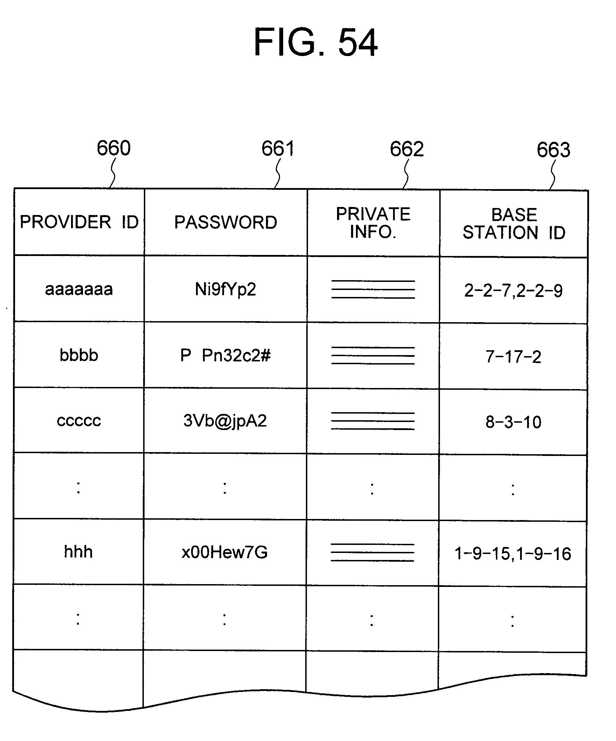

Fig. 54 shows an example of a database as a collection of files relating to the base station providers stored in the storage 650. In the drawing, reference numeral 660 denotes ID of a base station provider, numeral 661 denotes the password of the base station provider, 662 denotes private information about the base station provider, and 663 denotes ID's of all base stations offered from the base station provider. For example, it will be appreciated from the drawing that the base station provider having an ID "aaaaaaa" has a registered password "Ni9fYp2" and offers base stations "2-2-7" and "2-2-9".

Explanation will next be made as to the operations of the server computer 630 and base station 632 in the constituent elements of the communication system of Fig. 51. The operation of the server computer 630 will first be explained. The server computer 630 performs the operation shown in the first embodiment, base-station offer procedure operation, and operation of monitoring the base station offered from the base station provider.

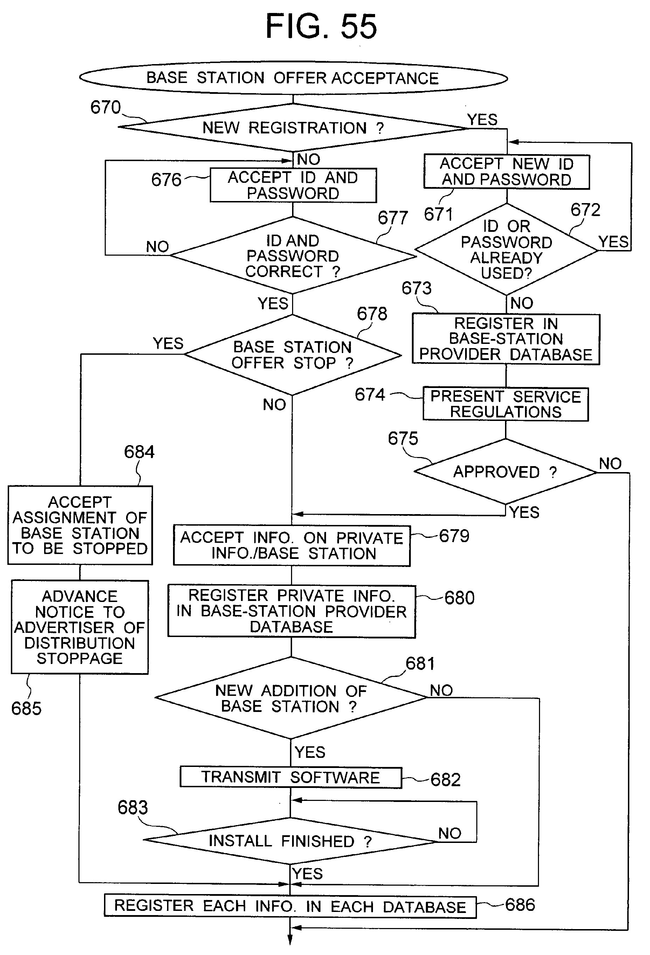

Fig. 55 shows a flowchart for explaining the operation of the server computer 630 when the base station provider performs the base station offer procedure over the advertisement company with use of the terminal 631. It is assumed therein that the base station offer procedure includes new addition of a base station to be offered, stoppage of offer of the base station already offered, and modification of private information of the base station provider. The base station offer procedure, which will be explained below, is carried out by the server computer 630 which causes the terminal 631 to display various base station offer procedure information on the display screen of the terminal 631 connected via the network 100 and by the base station provider who operates the terminal 631 according to the display information. When the terminal 631 is connected to the server computer 630, the controller 120 performs the following operations under control of the main program stored in the main program 124. The server computer first examines whether or not the base station provider is a new provider (step 670). When the accessed base station provider is a new provider, the server computer prompts the new base station provider to conduct a new registration. In the new registration procedure, the server computer accepts an ID and password of the new provider (step 671). To avoid double registration, the server computer examines whether or not the accepted ID or password is already used by another base station provider (step 672). When the accepted ID or password is already used, the server computer prompts the new provider to enter a different ID or password. When the accepted ID or password is not used yet, the server computer creates a base station provider file on the basis of the ID and password and registers it in the base-station provider database 650 (step 673). Then the server computer causes the terminal 631 to display regulations/conditions determined by the advertisement company for the base station provider on its display section (step 674), and examines whether or not the base station provider approves it (step 675). The above regulations/conditions include, for example, a time zone for the base station to be operated, functions/performances to be provide with the base station, conditions of generation of the result/return fee, and how to calculate the result/return fee. When the base station provider approved the above regulations/conditions, the server computer accepts the private information on the base station provider and the installation location of the base station (step 679), and registers the accepted private information in the base-station provider database 650 (step 680). The server computer next transmits to the terminal 631 a software application which enables the offered base station to be operated as one of the base stations in the system (step 682). The base station provider installs the software in the base station before a date presented by the advertisement company. And the server computer examines whether or not the software is already installed in the base station (step 683). When the software is already installed, the server computer assigns an ID to the new base station, registers it in the base-station provider database 650, calculates an advertisement fee basic charge on the basis of the installation location accepted in the step 679, creates a file relating to the base station, and registers it in the base station database 123. On the other hand, when the base station provider is not a new provider in the step 670, the server computer accepts the already-assigned ID and password of the base station provider (step 676), and examines whether or not the entered ID and password are correct (step 677). The server computer next examines whether or not the procedure contents of the base station provider indicates the stoppage of offer of the base station (step 678). When the procedure contents is not the offer stoppage, the server computer performs the operations of the step 579 and subsequent steps. The server computer examines whether or not the procedure contents indicates new addition of a base station in the step 681. When the procedure contents is not the new addition, the server computer does not perform the steps 682 and 683. When the procedure contents is the offer stoppage of the base station in the step 678, the server computer accepts the assignment of the base station to be stopped (step 684), and informs the advertiser of the advertisement information being distributed to the assigned base station of the fact of the stoppage of the advertisement information distribution of the base station in question (step 685). The server computer then deletes information corresponding to the assigned base station from the associated databases at a timing determined between the advertiser and base station provider (step 686).

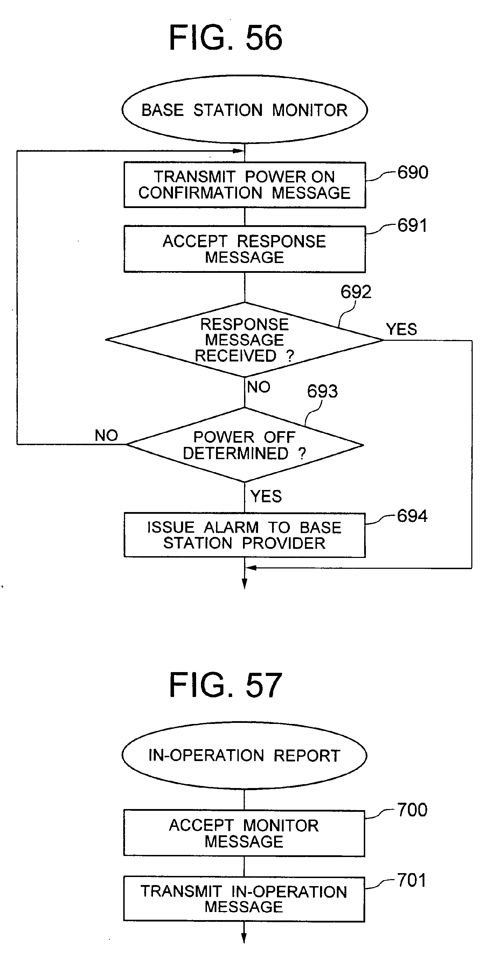

Fig. 56 shows a flowchart for explaining the operation of the server computer 630 when confirming whether or not the base station offered by the base station provider is operating. The server computer 630 is monitoring whether or not the power of the base station is turned ON for the time period determined in the aforementioned procedure at all times. In each base station, the controller 120 performs the following operations at intervals of a constant time under control of the main program 124. The server computer first transmits a monitor message indicative of confirmation of whether or not the power is turned ON to the base station via the network 100 (step 690), and also accepts a response message for a fixed period of time (step 691). When the server computer receives the response message from the base station within the time period, the server computer determines that the base station is operating (step 692). When failing to receive the response message from the base station in the period, the server computer repeats the operations of the steps 690 to 692 by a predetermined number of times. When failing to receive the response message even once in the period, the server computer determines that the banner advertisement is not operating (step 693), and give an alarm to the base station provider, e.g., by telephone to prompt the base station provider to operate the base station (step 694).

Explanation will next be made as to the operation of the base station 632. The base station 632, under control of the software installed in the above base station provider procedure, performs the operations shown in the first embodiment and the responding operation to the monitor message received from the server computer 630.

The operation of the base station 632 in the responding operation will be explained below. Fig. 57 is a flowchart for explaining the operation of the base station 632 in the responding operation. It is assumed in the following explanation that the base station 632 is operating. If the base station 632 is not operating, the base station performs no operation. The controller 170 performs the following operations under control of the main program 173. When receiving the monitor message from the server computer 630 (step 700), the base station transmits a message indicative "in operation" to the server computer 630 (step 701).

In accordance with the present invention, the user can perform the radio data communication with the base station at a desired time to selectively acquire necessary information. Further, the advertisement fee charging can be based on the total number of users who got advertisement information from the base station and visited the shop associated with the advertisement information, based on the amount of sales by the users, or based on the total number of portable communication terminals found by the base station for distribution of the advertisement information.

## Claims

1. A server system (101, 630) comprising:
a communication section (121) for transmitting and receiving data via a network (100);
a storage section (126) for storing advertisement information therein;
a storage section (123) for storing information relating to a base station therein; and
a storage section (125) for storing information about an advertiser as customer information,
and wherein said server system transmits the advertisement information requested by an advertiser to distribute it to a base station specified by the advertiser and calculates an advertisement fee to be charged to the advertiser the basis of a visited-customer history received from an exclusive device installed at the shop associated with the advertisement information.

2. A server system (101, 630) as set forth in claim 1, further comprising a storage section (650) for storing therein information about a base station provider,
and wherein said server system transmits the advertisement information requested by a customer to distribute it to a base station specified by the advertiser and when the base station is offered from the base station provider, the server system calculates an advertisement fee to be charged to the advertiser and a result/return fee to be paid to said base station provider on the basis of a visited-customer history received from an exclusive device installed at the shop associated with the advertisement information.

3. A server system (101, 630) comprising:
a communication section (121) for transmitting and receiving data via a network (100);
a storage section (126) for storing advertisement information therein;
a storage section (123) for storing information relating to a base station therein; and
a storage section (125) for storing information about an advertiser as customer information,
and wherein said server system transmits the advertisement information requested by an advertiser to distribute it to a base station specified by the advertiser and calculates an advertisement fee to be charged to the advertiser the basis of a found portable-communication-terminal history received from the base station.

4. A method for calculating an advertisement fee to be charged to an advertiser, wherein the total number of users who received advertisement information from a base station and dropped in at a shop is calculated on the basis of a visited-customer history received from an exclusive device installed at the shop associated with the advertisement information requested by the advertiser to distribute, and the advertisement fee is determined based on the total visitor number.

5. A method for calculating an advertisement fee to be charged to an advertiser, wherein the amount of sales caused by users who received advertisement information from a base station and dropped in at a shop is calculated on the basis of a visited-customer history received from an exclusive device installed at the shop associated with the advertisement information requested by the advertiser to distribute, and the advertisement fee is determined based on the calculated amount of sales.

6. A method for calculating an advertisement fee to be charged to an advertiser, wherein the total number of portable communication terminals found by a base station is calculated on the basis of a found portable-communication-terminal history received from the base station for distribution of advertisement information requested by an advertiser to distribute, and the advertisement fee is determined by the total number.

7. A base station (103) comprising:
a storage section (174) for storing therein advertisement information;
a radio communication section (172) for transmitting and receiving data to and from a plurality of portable communication terminals in the form of a radio signal; and
a finder device (177) for finding at least one of the plurality of portable communication terminals present within a radio signal arrival range,
and wherein the base station transmits a radio connection request to the portable communication terminal found by said finder device, and when receiving a connection approval from the portable communication terminal, the base station transmits information for selection of advertisement information to the portable communication terminal and transmits the selected advertisement information to the portable communication terminal.

8. A base station (103) as set forth in claim 7, wherein said storage section (174) for storing therein said advertisement information stores first advertisement information and second advertisement information including a detail of said first advertisement information with respect to each advertisement object, transmits information for selection of the first and second advertisement information to the portable communication terminal, and transmits the selected advertisement information to said portable communication terminal.

9. A base station (103) as set forth in claim 7, further comprising:
a communication section (171) for transmitting and receiving data via a network (100);
a section (170) for newly adding or deleting advertisement information with respect to said storage section (174) for storing advertisement information according to instruction information received from a server system via the network (100); and
a section (170) for updating information to select said advertisement information.

10. A base station (103) as set forth in claim 7, further comprising a storage section (59) for storing therein a found portable communication terminal as a found portable-communication-terminal history, and wherein, when the base station found the portable communication terminal present within said radio signal arrival range, an identifier corresponding to the portable communication terminal is stored in said storage section (174) for storing the advertisement information together with a found date.

11. A base station (103) as set forth in claim 10, further comprising a communication section (171) for transmitting and receiving data via a network, and wherein said communication section transmits said found portable-communication-terminal history to a server system connected to said network.

12. An exclusive device (106) installed at a shop associated with advertisement information, comprising:
a storage section (224) for storing therein a visited-customer history;
a radio communication section (222) for transmitting and receiving data to and from a plurality of portable communication terminals; and
a finder device (227) for finding at least one of the plurality of portable communication terminals present within a radio signal arrival range, and
wherein the exclusive device confirms whether or not the portable communication terminal found by the finder device already received the advertisement information associated with the shop from a base station and, when the portable communication terminal already received the advertisement information, the exclusive device records a date at which said confirmation was made as a visited-customer history in the storage section.

13. An exclusive device (106) as set forth in claim 12, further comprising a communication section (221) for transmitting and receiving data via a network, and wherein said communication section transmits said customer history to a server system connected to said network.

14. An exclusive device (106) as set forth in claim 12, wherein the exclusive device records the amount of sales caused by a user as a customer history.

15. A portable communication terminal (104) comprising:
a storage section (203) for storing therein a received advertisement information history; and
a radio communication section (201) for transmitting and receiving data to and from a base station or an exclusive device in the form of a radio signal, and
wherein, when receiving advertisement information from the base station, the portable communication terminal records an identifier corresponding to the advertisement information together with its received date as an received advertisement information history in said storage section (204), and the portable communication terminal is confirmed by the exclusive device installed at a shop associated with the advertisement information as to the fact that the communication terminal received the advertisement information from the base station using the radio communication section.
